# EUROPEAN PATENT APPLICATION

(11) **EP 4 801 050 A1**
(43) Date of publication of application: **02.09.2026**
(21) Application number: 24950907.6
(22) Date of filing: 31.12.2024
(51) Int. Cl.: H04N 23/60

(54) **PANORAMIC UNMANNED AERIAL VEHICLE-BASED TARGET FOLLOWING METHOD, DEVICE, UNMANNED AERIAL VEHICLE AND FLIGHT SYSTEM**

(71) Applicant: Arashi Vision Inc., Shenzhen, Guangdong 518000 (CN)
(72) Inventor: JI, Jingjing, Shenzhen, Guangdong 518000 (CN); XU, Rui, Shenzhen, Guangdong 518000 (CN); YANG, Siqi, Shenzhen, Guangdong 518000 (CN)
(74) Representative: Michalski Hüttermann & Partner mbB
(86) International application number: PCT/CN2024/144277
(87) International publication number: WO 2026/143439

(57) **Abstract**

In some aspects, a target following method for a panoramic unmanned aerial vehicle (UAV) is provided. A first panoramic image captured by the panoramic UAV is obtained. In response to a trigger operation for a target following function, a target object can be determined based on the first panoramic image. The panoramic UAV can be controlled to follow the target object.

## Description

### Technical Field

The present disclosure relates to the technical field of UAVs, and specifically relates to a target following method, device, UAV, and flight system based on a panoramic UAV.

### Background

A panoramic UAV is equipped with a panoramic image-capturing device, which can capture 360-degree panoramic images or videos. The user can view the panoramic images or videos through a display terminal, such as a mobile phone, computer, etc., providing the user with an immersive visual experience.

With the widespread application of UAVs in various fields, user demand is also increasing. For example, the following function of a panoramic UAV for a movable object is a function that is currently highly concerned by users and urgently needed to be realized.

### Summary

The present disclosure provides a target following method, device, UAV, and flight system based on a panoramic UAV.

According to a first aspect, the present disclosure provides a target following method for a panoramic UAV, including: obtaining a first panoramic image captured by the panoramic UAV; in response to a trigger operation for a target following function, determining a target object based on the first panoramic image; and controlling the panoramic UAV to follow the target object.

According to a second aspect, the present disclosure provides a panoramic UAV, including: a panoramic image capturing device, configured to capture a panoramic image; a wireless communication line, configured to send the panoramic image and obtain a control command, where the control command is generated by a control terminal of the panoramic UAV by obtaining the panoramic image, and after, in response to a trigger operation for a target following function, determining a target object based on the panoramic image; and a processor, configured to follow the target object based on the control command.

According to a third aspect, the present disclosure provides a control terminal, including: a communication module, configured to obtain a first panoramic image captured by a panoramic UAV; one or more processors, working individually or collectively; and a memory in communication with the processor. The memory stores instructions executable by the processor, and the instructions, when executed by the processor, cause the processor to, in response to a trigger operation for a target following function, determine a target object based on the first panoramic image; and control the panoramic UAV to follow the target object.

According to a fourth aspect, a non-transitory computer-readable storage medium storing computer instructions is provided, where the computer instructions are configured to cause a computer to execute the above method.

According to a fifth aspect, a flight system is provided, including: a panoramic UAV, configured to: capture a first panoramic image; send the first panoramic image to a control terminal; and receive a first control command from the control terminal to follow a target object based on the first control command; and a control terminal, configured to: obtain the first panoramic image; in response to a trigger operation for a target following function, determine the target object based on the first panoramic image; generate a first control command for controlling the panoramic UAV to follow the target object based on the target object; and send the first control command to the panoramic UAV.

According to the implementations of the present disclosure, by obtaining the panoramic image captured by the panoramic UAV, determining the target object based on the first panoramic image, and controlling the panoramic UAV to follow the target object, the following function of the panoramic UAV for a movable object is realized, improving the user experience.

### Brief Description of Drawings

The drawings are used to better understand the present solution and do not constitute a limitation on the present disclosure.
FIG. 1 schematically shows an application scenario of a target following method for a panoramic UAV, according to some implementations of the present disclosure.
FIG. 2 is a flowchart schematically showing a target following method for a panoramic UAV, according to some implementations of the present disclosure.
FIG. 3A schematically shows a diagram of determining the expected target identified in the first image as the target object, according to some implementations of the present disclosure.
FIG. 3B schematically shows a diagram of determining the holding object of the control terminal as the target object, according to some implementations of the present disclosure.
FIG. 3C schematically shows a diagram of displaying the holding object of the control terminal in an approximately centered manner in the display screen after determining the holding object of the control terminal as the target object, according to some implementations of the present disclosure.
FIG. 3D schematically shows a diagram of determining the object selected by the user in the first image as the target object, according to some implementations of the present disclosure.
FIG. 3E schematically shows a diagram of determining the target object by adjusting the display view angle, according to some implementations of the present disclosure.
FIG. 3F schematically shows a diagram of determining the target object based on the display proportion of each candidate object, according to some implementations of the present disclosure.
FIG. 3G schematically shows a diagram of determining the target object based on the display position of each candidate object, according to some implementations of the present disclosure.
FIG. 4 is a schematic diagram showing a follow mode switching interface and illustrations of each follow mode, according to some implementations of the present disclosure.
FIG. 5 schematically shows a diagram of switching the follow position in the follow mode, according to some implementations of the present disclosure.
FIG. 6 schematically shows a diagram of controlling the panoramic UAV to fly around the target object based on the surround radius and surround height selected by the user, according to some implementations of the present disclosure.
FIG. 7 schematically shows an interaction diagram of releasing the preset locked state in the automatic follow mode, according to some implementations of the present disclosure.
FIG. 8 schematically shows a diagram of changing the follow target after releasing the preset locked state in the automatic follow mode, according to some implementations of the present disclosure.
FIG. 9 schematically shows a diagram of terminating following when the target cannot be identified in the panoramic image, according to some implementations of the present disclosure.
FIG. 10 schematically shows a diagram of terminating following when the follow distance is greater than a preset distance, according to some implementations of the present disclosure.
FIG. 11 schematically shows a diagram of terminating following when the panoramic UAV is flying abnormally, according to some implementations of the present disclosure.
FIG. 12 schematically shows a diagram of an obstacle avoidance scenario during the following process of the panoramic UAV, according to some implementations of the present disclosure.
FIG. 13 schematically shows a block diagram of the panoramic UAV, according to some implementations of the present disclosure.
FIG. 14 schematically shows a block diagram of the control terminal, according to some implementations of the present disclosure.
FIG. 15 schematically shows a diagram of a flight system, according to some implementations of the present disclosure.

### Detailed Description

In order to make the objectives, technical solutions, and advantages of the present disclosure's implementations clearer, the following will provide a clear and complete description of the technical solutions in the implementations of the present disclosure with reference to the accompanying drawings. Obviously, the described implementations are part of the implementations of the present disclosure, rather than all of them. Based on the described implementations of the present disclosure, all other implementations obtained by those of ordinary skill in the art without creative labor shall fall within the scope of protection of the present disclosure. It should be noted that throughout the drawings, the same or similar reference numerals are used to indicate the same or similar elements. In the following description, some specific implementations are for illustrative purposes only and should not be construed as any limitation to the present disclosure, but merely as examples of the implementations of the present disclosure. Where conventional structures or configurations may cause confusion in understanding the present disclosure, they are omitted. It should be noted that the shapes and sizes of the components in the drawings do not reflect the actual size and proportion, but are only schematic representations of the content of the implementations of the present disclosure.

Unless otherwise defined, the technical terms or scientific terms used in the implementations of the present disclosure should have the usual meanings understood by those skilled in the art. The terms "first," "second," and similar words used in the implementations of the present disclosure do not indicate any order, quantity, or importance, but are only used to distinguish different components.

In aerial photography, visual tracking technology is often used, and a dual-joystick control terminal is configured to interact with the unmanned aerial vehicle (UAV), controlling the UAV to follow a target object in flight to obtain images from the UAV's head view angle. However, this method is difficult to operate, and when the user is engaged in outdoor activities such as skiing, mountaineering, or cycling, it is difficult to control the UAV while participating in outdoor sports, thereby reducing the user experience.

In view of this, the implementations of the present disclosure, by obtaining a panoramic image captured by a panoramic UAV, allow the user to simply perform a trigger operation for a target following function, so that the target object can be determined based on the first panoramic image. After the target object is determined, the panoramic UAV can be controlled to automatically follow the target object without user operation, thereby realizing the following function of the panoramic UAV for a movable object and improving the user experience.

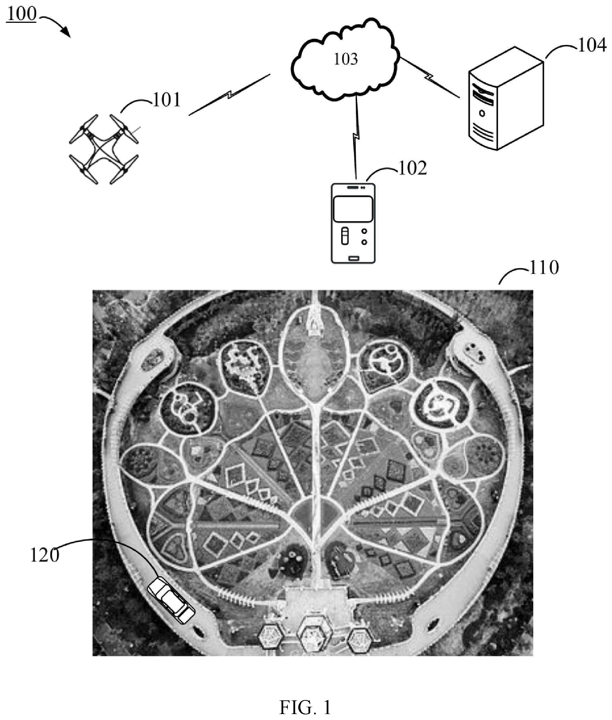

FIG. 1 schematically shows an application scenario of a target following method for a panoramic UAV, according to some implementations of the present disclosure.

As shown in FIG. 1, in this exemplary architecture 100, it can include: a panoramic UAV 101, a control terminal 102, a network 103, and a server 104. The network 103 is configured to provide a communication link medium among the panoramic UAV 101, the control terminal 102, and the server 104. The network 103 can be a wireless communication link.

The control terminal 102 can be a control terminal capable of interacting with the panoramic UAV 101, and the interaction methods include but are not limited to triggering a button, touch screen, or somatosensory action. For example, the control terminal 102 can be a somatosensory remote control device configured for the panoramic UAV 101, or it can be another terminal device configured with an application program capable of interacting with the panoramic UAV 101, such as a mobile phone, gimbal, etc.

The panoramic UAV 101 is configured with a panoramic image capturing device, which can be configured to capture a panoramic image 110. The user can use the control terminal 102 to trigger the target following function, determine the target object 120 from the panoramic image 110, and control the panoramic UAV 101 to follow the target object 120.

The panoramic image 110 captured by the panoramic UAV 101 can be stored in a memory configured on the panoramic UAV 101, or it can be sent to the server 104 for storage via the network 103. The control terminal 102 can obtain the panoramic image 110 from the panoramic UAV 101 or the server 104 via the network 103 to determine the target object 120.

The implementations of the present disclosure can be executed by the server 104. For example, after determining the target object 120, the server 104 can also generate a control command for controlling the panoramic UAV 101 by obtaining the movement trajectory of the target object 120 or the action of the user holding the control terminal 102. The control command is sent to the panoramic UAV via the network 103 to control the panoramic UAV 101 to follow the target object 120.

The implementations of the present disclosure can also be executed by the control terminal 102. For example, after obtaining the panoramic image 110, the control terminal 102 can determine the target object 120 based on image recognition or user operation. Then, by obtaining the movement trajectory of the target object 120 or the action of the user holding the control terminal 102, a control command for controlling the panoramic UAV 101 is generated and sent to the panoramic UAV via the network 103 to control the panoramic UAV 101 to follow the target object 120.

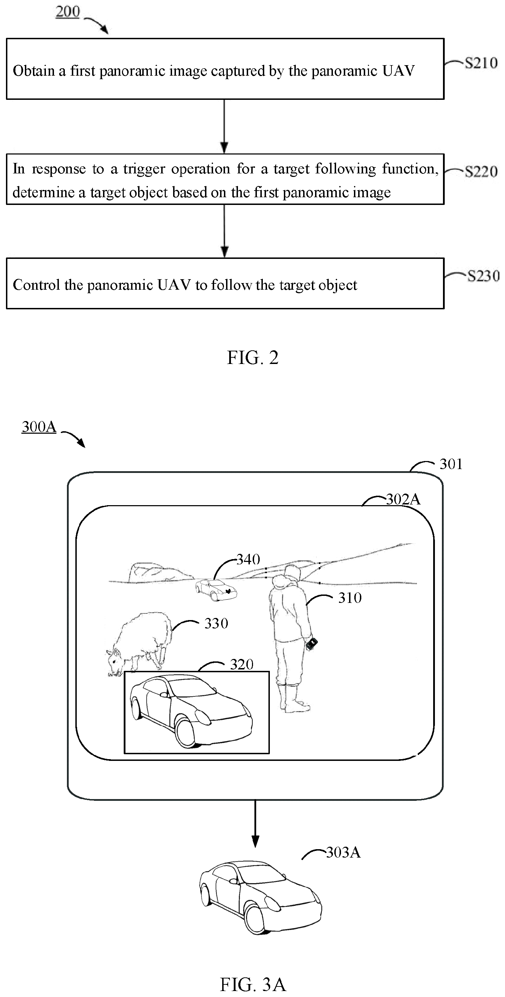

FIG. 2 is a flowchart schematically showing a target following method 200 for a panoramic UAV, according to some implementations of the present disclosure.

As shown in FIG. 2, the method 200 can include operations S210 to S230.

In operation S210, obtain a first panoramic image captured by the panoramic UAV.

In operation S220, in response to a trigger operation for a target following function, determine a target object based on the first panoramic image.

In operation S230, control the panoramic UAV to follow the target object.

According to the implementations of the present disclosure, a panoramic image capturing device is usually mounted on the panoramic UAV, which can capture a 360-degree panoramic image or video in the air, providing the user with an immersive visual experience. The panoramic image capturing device can include, for example, a fisheye lens. As an example, the panoramic UAV can be specifically equipped with two fisheye lenses deployed oppositely up and down, which can capture images through the fisheye lenses and stitch the images captured by the fisheye lenses to obtain a 360° panoramic image or panoramic video. The user can control the display view angle to view objects in the image from left to right and from top to bottom, achieving a 360° panoramic three-dimensional spatial effect.

According to the implementations of the present disclosure, the target object can be determined from the first panoramic image based on image recognition technology. For example, object type recognition can be performed on the first panoramic image, and then the recognized object can be determined as the target object. The types of objects to be recognized can be pre-configured, such as people, vehicles, boats, etc.

In some implementations, position recognition can also be performed on the first panoramic image, and then the object whose distance from the panoramic UAV meets a predetermined condition can be determined as the target object. The predetermined condition includes, but is not limited to, being the closest to the panoramic UAV.

According to the implementations of the present disclosure, controlling the panoramic UAV to follow the target object, during the process of following the target object, the panoramic UAV can follow the target object in flight, or it can not follow the target object in flight.

For example, the panoramic UAV can be configured to follow the target object in flight to maintain a constant relative position relationship between the panoramic UAV and the target object.

For example, the panoramic UAV can also be configured not to follow the target object in flight or follow the target object intermittently in flight to keep the shooting view angle always locked with the target object.

In some implementations, after determining the target object, the user can trigger the operation for determining the target object to realize the function of controlling the panoramic UAV to follow the target object.

The operation for determining the target object can include at least one of the following: a trigger operation for a button configured on the control terminal; or a trigger operation for a visual interface configured on the control terminal.

For example, the user can click the track button to control the panoramic UAV to enter the target following state.

By obtaining the panoramic image captured by the panoramic UAV, determining the target object based on the first panoramic image, and controlling the panoramic UAV to follow the target object, the following function of the panoramic UAV for a movable object is realized, improving the user experience.

According to the implementations of the present disclosure, the trigger operation for the target following function can include at least one of the following: a trigger operation for a button configured on the control terminal; a trigger operation for a visual interface configured on the control terminal; or matching a current pose of a holding object of the control terminal with a first preset pose.

It is worth noting that the form of the trigger operation can be a specific touch operation, such as a single click, long press, double click, sliding operation, etc., and can also be triggered by voice. In some implementations, the trigger operation can also be a combination of a series of operations, and the present disclosure does not limit this and will not elaborate further.

In some implementations, the button can be a single-function button or a multi-function button. For example, the control terminal can have at least one button, which can specifically include a button for quickly starting the following function (which can be referred to as the track button). The aforementioned button can specifically be the track button. When the button is a single-function button, the trigger operation can include but is not limited to a click or double-click operation.

In some implementations, when the button is a multi-function button, the function to be triggered can be determined based on the trigger sequence of the button.

For example, the track button can not only trigger the target tracking function but also trigger the target lock function. It can be configured so that the first click operation on the track button is used to trigger the target tracking function, and the second click operation on the track button within a predetermined period is used to trigger the target lock function.

In some implementations, when the button is a multi-function button, the function to be triggered can be determined based on the trigger duration of the button.

For example, the track button can not only trigger the target tracking function but also trigger the target change function. It can be configured so that a click operation on the track button with a duration less than 3 seconds is used to trigger the target tracking function. A click operation on the track button with a duration greater than or equal to 3 seconds is used to trigger the target change function.

In some implementations, the configuration methods described above can be combined according to actual needs to reduce the number of buttons configured on the control terminal, simplify the user operation difficulty, and further improve the user experience.

In addition to being configured with buttons, the control terminal can also be configured with a display, which is configured to display a visual interface. A virtual button for triggering the target following function can be configured on the visual interface, and the trigger operation of the virtual button includes, but is not limited to, touch screen click, long press of the virtual button, sliding, etc.

In some implementations, the control terminal can also support somatosensory interaction with the panoramic UAV. For example, the first preset pose can be the user holding the control terminal with the hand raised above the user's head, or the user holding the control terminal and turning around in place, etc. When the user holds the control terminal and completes an action matching the first preset pose, the target following function is triggered.

According to the implementations of the present disclosure, by flexibly configuring the trigger operation for the target following function, it can meet the user's needs in different scenarios, further improving the user experience.

According to the implementations of the present disclosure, determining the target object based on the first panoramic image can include the following operations: determining a first image based on the first panoramic image; displaying the first image via a visual interface; and in response to identifying an expected target for the first image, determining the expected target as the target object.

According to the implementations of the present disclosure, the first image corresponds to a predetermined display view angle of the first panoramic image. The predetermined display view angle can include but is not limited to: a view angle corresponding to a somatosensory pose of the control terminal; a view angle determined based on a trigger operation for any candidate view angle in the visual interface by a user; and a preset view angle corresponding to a flight direction of the panoramic UAV.

In some implementations, a mapping relationship between the somatosensory pose of the control terminal and the display view angle can be pre-configured, so that the display view angle can be determined based on the somatosensory pose.

For example, when the somatosensory pose of the control terminal is parallel to the ground, the corresponding display view angle is the view angle in which the holding object of the control terminal is displayed in the center of the first image.

In some implementations, a candidate view angle switching interface can be configured on the visual interface, so that a trigger operation for any candidate view angle can be performed on the candidate view angle switching interface, such as touch screen click, sliding, etc., to determine the predetermined display view angle.

In some implementations, a preset view angle corresponding to the flight direction of the panoramic UAV, such as the head view angle, can be determined as the predetermined display view angle.

In some implementations, when the first image is displayed via the visual interface, the user can determine whether the first image includes the target that the user expects to follow based on the content of the first image. When the expected target is identified for the first image, the expected target can be determined as the target object.

FIG. 3A schematically shows a diagram 300A of determining the expected target identified in the first image as the target object, according to some implementations of the present disclosure.

As shown in FIG. 3A, the visual interface 302A of the control terminal 301 displays the first image corresponding to the predetermined display view angle. The first image can include the holding object 310 of the control terminal, vehicle T 320, animal 330, and vehicle Q 340. The expected target identified based on image recognition technology is vehicle T 320, so vehicle T 320 can be determined as the target object 303A.

By displaying the first image of the predetermined display view angle on the control terminal via the visual interface and identifying the target object based on the first image, the system can be configured to recommend a target to be followed to the user through image recognition, reducing the complexity of the user's operation when wanting to control the panoramic UAV to realize target following in outdoor sports scenarios.

In practical application scenarios, the expected target may not be identified due to a color similar to the background or a low number of corresponding pixels in the first image, making it impossible to determine the target object. In this case, a following target can be selected from the first image.

For example, in response to failing to identify the expected target for the first image, the target object can be determined from a holding object of the control terminal and a user selection object as determined according to the first image, where the holding object of the control terminal has a higher priority.

In some implementations, when the expected target is not identified for the first image, it can be that after the user triggers the target following function, the expected target is not identified within a predetermined duration, and then the target object is determined from the holding object of the control terminal and the user selection object. The predetermined duration can be configured according to the application requirements of the actual scenario, for example, 30 seconds.

When the expected target is not identified for the first image, the holding object of the control terminal is preferentially determined as the target object. For example, if the expected target is not identified within 30 seconds and it is detected that the user has triggered the operation for determining the target object, the holding object of the control terminal can be determined as the target object.

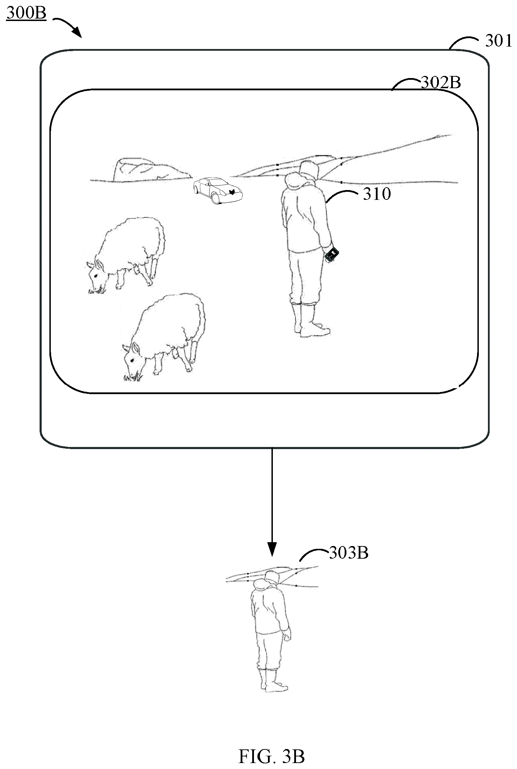

FIG. 3B schematically shows a diagram 300B of determining the holding object of the control terminal as the target object, according to some implementations of the present disclosure.

As shown in FIG. 3B, the visual interface 302B of the control terminal 301 does not identify the expected target, so the holding object 310 of the control terminal can be determined as the target object 303B.

For example, when the user is skiing, if the expected target is not identified within 30 seconds after the user triggers the target following function, the user can be determined as the target object, thereby reducing the complexity of the user's interactive operation.

After determining the holding object of the control terminal as the target object, the above method can further include the following operations: determining a third image in the first panoramic image; and displaying the third image via the visual interface, where the holding object is displayed in a centered manner in the third image.

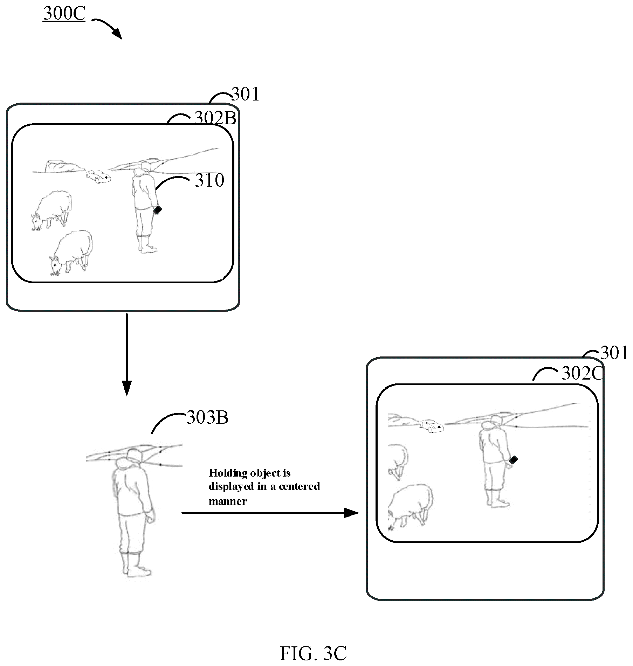

FIG. 3C schematically shows a diagram 300C of displaying the holding object of the control terminal in a centered manner in the display screen after determining the holding object of the control terminal as the target object, according to some implementations of the present disclosure.

As shown in FIG. 3C, after determining the target object 303B as the holding object 310 of the control terminal 301, a third image in which the holding object is displayed in a centered manner can be determined from the first panoramic image and displayed via the visual interface 302C, so that the user can view their own image during outdoor sports through the visual interface.

By displaying the third image in which the holding object is centered via the visual interface, the user can view their own sports actions during exercise, which is convenient for capturing wonderful moments of sports actions and further improves the user experience.

When the expected target is not identified for the first image, and a user selection operation for other objects displayed in the first image in the visual interface is detected within a predetermined period, the object selected by the user can be determined as the target object.

For example, if the expected target is not identified within 30 seconds and it is detected that the user has triggered the operation for selecting the target object, the object selected by the user can be determined as the target object.

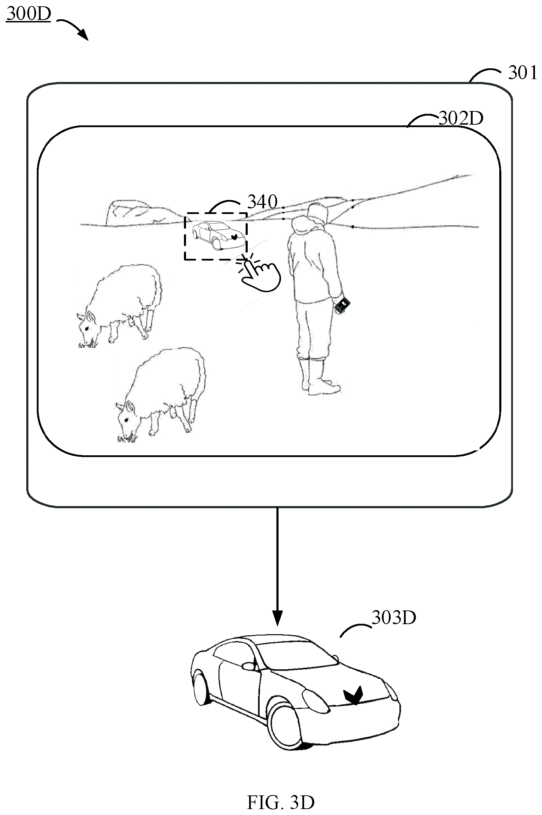

FIG. 3D schematically shows a diagram 300D of determining the object selected by the user in the first image as the target object, according to some implementations of the present disclosure.

As shown in FIG. 3D, in the visual interface 302D of the control terminal 301, when the user selects vehicle 340 from the holding object of the control terminal, animal, and vehicle in the first image, vehicle 340 can be determined as the target object 303D.

By displaying the first image via the visual interface, it is convenient for the user to determine the following target from the first image through interaction with the control terminal, further improving the flexibility of selecting the following target.

In addition to determining the target object based on the first image corresponding to the predetermined display view angle, when the expected target is not identified in the first image, the predetermined display view angle can also be adjusted, and a second image can be displayed via the visual interface, so that the expected target is included in the adjusted second image corresponding to the adjusted display view angle.

According to the implementations of the present disclosure, adjusting the predetermined display view angle includes the following operations: in response to a trigger operation for adjusting the predetermined display view angle, adjusting the predetermined display view angle.

In some implementations, the trigger operation includes: a trigger operation for a control component configured on the control terminal. The control component includes at least one of the following: a joystick, a scroll wheel, or a preset button.

For example, the joystick can be configured with multiple gears, each gear corresponding to a display view angle. The user can adjust the predetermined display view angle by changing the gear of the joystick.

For example, when the user moves the joystick to the up, down, left, or right position, the corresponding display view angle screen can be displayed in the visual interface of the control terminal. When the user presses the joystick, the screen corresponding to the head view angle can be displayed in the visual interface of the control terminal.

For example, the scroll wheel can be configured with multiple scrolling directions, each scrolling direction corresponding to a display view angle. The predetermined display view angle can be adjusted by operating the scrolling direction of the scroll wheel.

For example, the scroll wheel can be configured as an infinite-position and pressable form, where infinite-position means that the user can infinitely scroll the scroll wheel to the left or right, and there is no restriction on the stroke or angle of the scroll. As an example, when the user rotates the scroll wheel, the current display screen of the visual interface of the control terminal can be correspondingly adjusted, so that the current display screen in the panoramic image is correspondingly adjusted with the rotation of the scroll wheel. For example, the angle or stroke of the scroll wheel rotation can have a mapping relationship with the adjustment range of the view angle, so that the user can better adjust the corresponding view angle of the current display screen in the panoramic image through the scroll wheel. In addition, when the user presses the scroll wheel, the visual interface of the control terminal can be switched from displaying the current display screen to displaying the screen corresponding to the head view angle.

For example, the preset button can also be configured with multiple operation parameters, each operation parameter corresponding to a display view angle. For example, double-clicking the preset button switches to the view angle in which the holding object of the control terminal is displayed in the center.

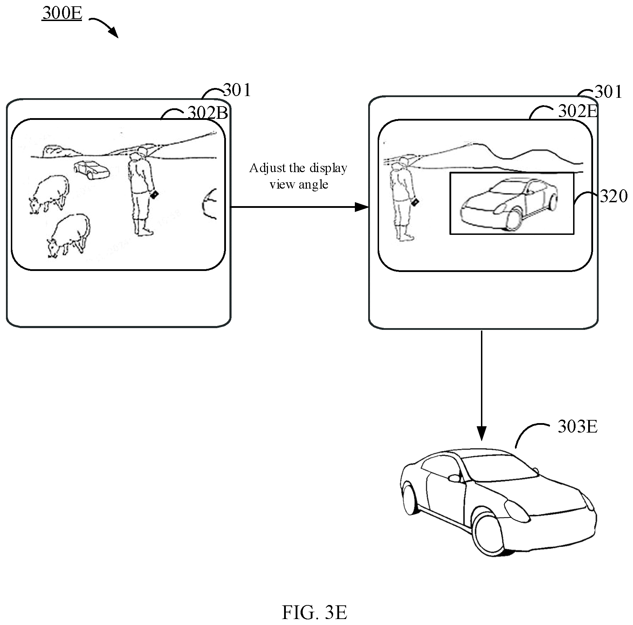

FIG. 3E schematically shows a diagram 300E of determining the target object by adjusting the display view angle, according to some implementations of the present disclosure.

As shown in FIG. 3E, the visual interface 302B of the control terminal 301 displays the first image of the predetermined display view angle. By adjusting the display view angle, the visual interface 302E displays the second image of the adjusted display view angle. The expected target identified based on the second image can be vehicle T 320, and vehicle T 320 can be determined as the target object 303E.

By adjusting the display view angle on the control terminal, not only is a panoramic visual experience provided to the user, but it is also possible to switch different display view angles without adjusting the flight pose of the panoramic UAV, and select the following target based on the panoramic field of view, reducing the complexity of the display view angle switching operation.

When the image displayed in the visual interface includes multiple candidate objects, in addition to determining the target object based on the user's selection operation for the candidate objects, the target object can also be determined based on the display proportion or display position of the candidate objects in the image.

In some implementations, the above method can further include the following operations: in a case where it is determined that the first image or the second image includes a plurality of candidate objects, obtaining a display proportion of each candidate object in the first image or the second image; and based on the display proportion, determining the expected target from the plurality of candidate objects.

According to the implementations of the present disclosure, the display proportion can be the ratio of the size of the detection box of the candidate object to the image size of the first image or the second image. For example, the detection box size of candidate object A is 3×3, and the image size of the first image or the second image can be 256×256, then the display proportion is 0.01%.

In some implementations, the candidate object with the largest display proportion can be determined as the expected target.

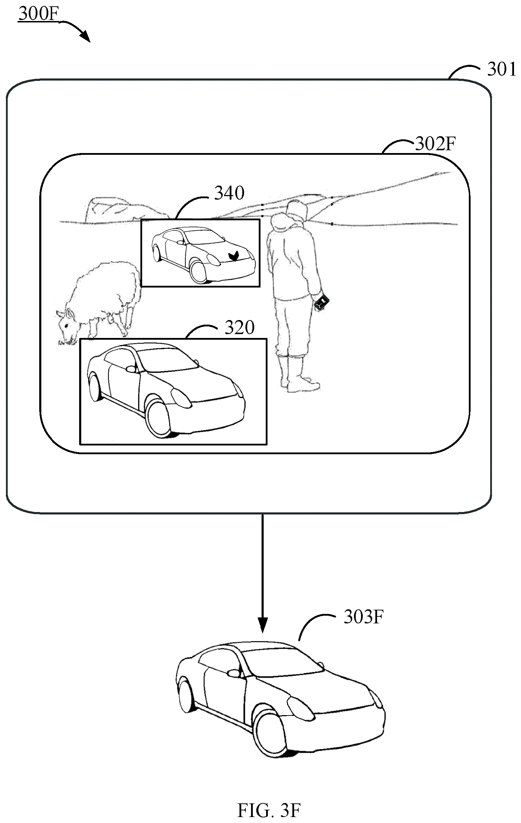

FIG. 3F schematically shows a diagram 300F of determining the target object based on the display proportion of each candidate object, according to some implementations of the present disclosure.

As shown in FIG. 3F, in the image displayed in the visual interface 302F, two candidate objects are identified, namely vehicle T 320 and vehicle Q 340.

In one example, the display proportion of vehicle T 320 is 30%. The display proportion of vehicle Q 340 is 15%. Since 30% > 15%, vehicle T 320 can be determined as the expected target, and then vehicle T 320 is determined as the target object 303F.

In some implementations, the above method can further include the following operations: in a case where it is determined that the first image or the second image includes a plurality of candidate objects, obtaining a display position of each candidate object in the first image or the second image; and based on the display position, determining the expected target from the plurality of candidate objects.

In some implementations, the candidate object displayed in the center can be determined as the expected target.

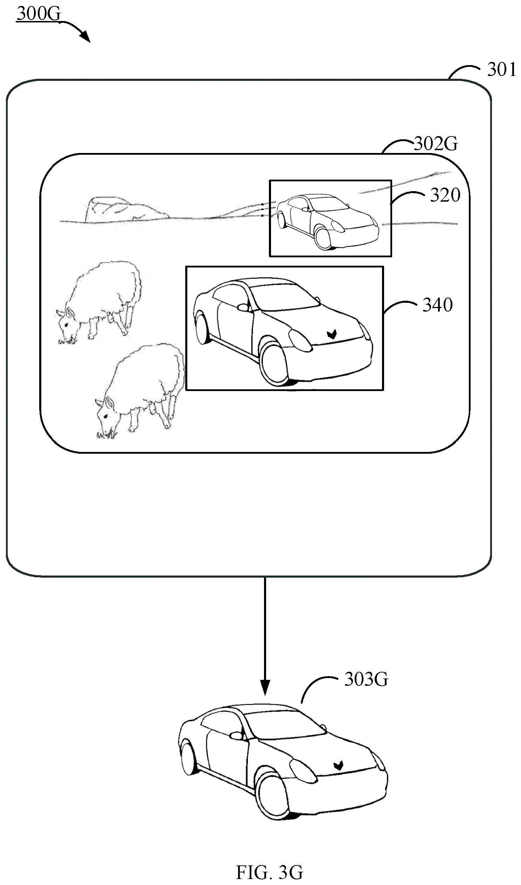

FIG. 3G schematically shows a diagram 300G of determining the target object based on the display position of each candidate object, according to some implementations of the present disclosure.

As shown in FIG. 3G, two candidate objects are also identified in the visual interface 302G, namely vehicle T 320 and vehicle Q 340.

Since vehicle Q 340 is located in the center of the image displayed in the visual interface 302G, vehicle Q 340 can be determined as the expected target, and then vehicle Q 340 is determined as the target object 303G.

When multiple candidate objects are identified in the image displayed in the visual interface, since objects that are closer to the panoramic UAV are often more in line with the user's intention to follow, these objects have a larger display proportion and are displayed in the center. Therefore, recommending the expected target to the user based on the display proportion or display position can reduce the user's operation burden.

As described above, the target following function can support multiple following modes. In order to facilitate user selection, a follow mode switching interface can be displayed via the visual interface on the control terminal; in response to a trigger operation for any follow mode in the follow mode switching interface, entering a target follow mode.

According to the implementations of the present disclosure, the target follow mode can include any of the following: an automatic follow mode, a visual lock follow mode, or a surround follow mode.

For example, the follow mode switching interface can be displayed by sliding down at the edge of the visual interface. It can also be displayed by a trigger operation for a preset button configured on the control terminal, such as clicking the menu button, so that the user can make a selection.

By intuitively displaying the follow modes available for switching to the user via the visual interface, the user's interest in exploring different follow modes is stimulated, further enhancing the fun of the target following function.

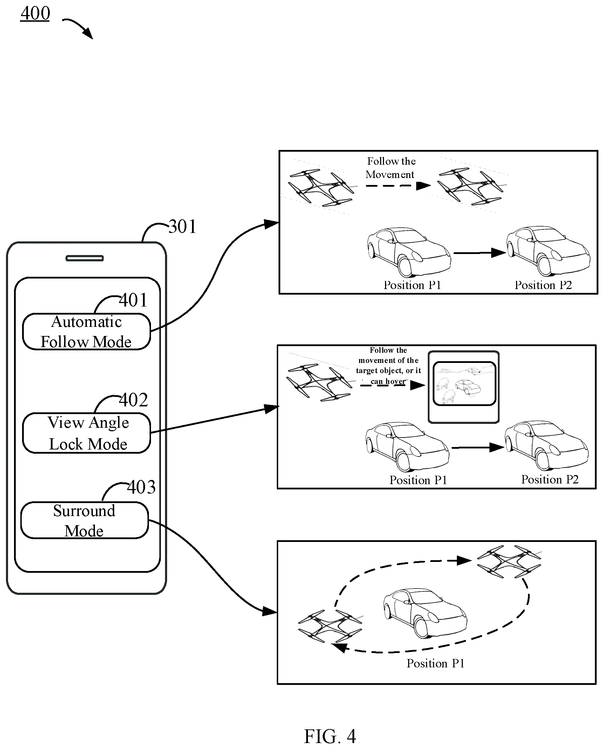

FIG. 4 is a schematic diagram 400 showing a follow mode switching interface and illustrations of each follow mode, according to some implementations of the present disclosure.

As shown in FIG. 4, the visual interface of the control terminal 301 displays the automatic follow mode 401, the view angle lock mode 402, and the surround mode 403.

According to the implementations of the present disclosure, controlling the panoramic UAV to follow the target object can include: controlling the panoramic UAV to follow the target object and capturing or recording.

For example, in the automatic follow mode, the control terminal is in a preset locked state, the position of the panoramic UAV is adjusted based on the relative position between the target object and the panoramic UAV, and the target object is captured or recorded.

As shown in FIG. 4, in the automatic follow mode, the panoramic UAV will follow the movement of the target object. For example, when the vehicle moves from position P1 to position P2, the panoramic UAV can generate a following flight trajectory in real time based on the obtained displacement trajectory of the vehicle. The relative position between the trajectory point of the following flight trajectory at each moment and the trajectory point of the vehicle displacement trajectory at the corresponding moment can always fluctuate within a predetermined range, so as to keep the panoramic UAV following the vehicle in flight.

For example, in the view angle lock mode, the relative position between the target object and the panoramic UAV can be adjusted using the control terminal, and the target object can be captured or recorded, so that the display view angle corresponding to the display screen on the control terminal is locked with the target object.

In the view angle lock mode, the user can adjust the relative position between the target object and the panoramic UAV using the control component configured on the control terminal, such as a joystick, scroll wheel, etc., to focus on capturing or recording the target object. The user can also control the panoramic UAV to lock the view angle with the target object through the somatosensory pose of the control terminal, for example, raising the control terminal and waving the arm three times, etc.

As shown in FIG. 4, in the view angle lock mode, the panoramic UAV can follow the movement of the target object, or it can hover at a certain position to capture or record the target object. However, whether the panoramic UAV follows in flight or not, the display view angle corresponding to the display screen on the control terminal is always locked with the target object.

In the surround mode, the panoramic UAV and the target object are controlled to surround the target object in a target relative position relationship and capture or record the target object.

As shown in FIG. 4, in the surround mode, the panoramic UAV can fly around the target object for one or more circles according to predetermined surround parameters.

According to the implementations of the present disclosure, by configuring multiple follow modes, more flexible and diverse shooting schemes are provided for the user, meeting the needs of different users in different application scenarios, and further improving the user experience.

In the automatic follow mode, in order to reduce user mis-operation, the control terminal is in a preset locked state, which includes at least one of the following: buttons configured on the control terminal (except the preset button) are in a locked state; and the preset button is configured to trigger at least one of the following: a capturing operation, a recording operation, an emergency obstacle avoidance operation, or a flight pose control operation. The somatosensory control operation of a holding object of the control terminal for the panoramic UAV is in a locked state.

In the preset locked state, the user can interact with the panoramic UAV through the virtual button configured on the visual interface, or trigger a capturing operation, recording operation, emergency obstacle avoidance operation, or flight pose control operation by operating the preset button of the control terminal.

For example, when the user sees an obstacle that is difficult to avoid suddenly appearing in front of the panoramic UAV, the user can double-click the preset button to trigger an emergency obstacle avoidance operation to control the panoramic UAV to hover at the current position.

For example, when the user wants to capture a wonderful moment and the current distance between the panoramic UAV and the target to be captured is relatively far, the user can adjust the flight pose of the panoramic UAV by operating the control component on the control terminal or the virtual button on the visual interface. When the display screen on the visual interface meets the user's intention, a capturing operation or recording operation can be triggered to record the wonderful moment.

It should be noted that in the preset locked state, the somatosensory control of the control terminal is in a locked state, but the visual interface of the control terminal can be in an unlocked state. Therefore, the user can interact with the screen on the control terminal, such as touch screen, sliding, etc., to realize operations such as adjusting the display view angle, switching the follow mode, and controlling the UAV flight.

According to the implementations of the present disclosure, in the automatic follow mode, the control terminal is in a preset locked state, which can reduce the probability of user mis-operation on the control terminal when completing a certain sports action, so as to ensure the flight safety of the panoramic UAV in the automatic follow mode.

In the automatic follow mode, the user can also use the control terminal to switch the follow view angle of the panoramic UAV. For example, a follow view angle switching interface can be displayed via the visual interface; and in response to a trigger operation for a target follow view angle, a display screen corresponding to the target follow view angle can be displayed via the visual interface.

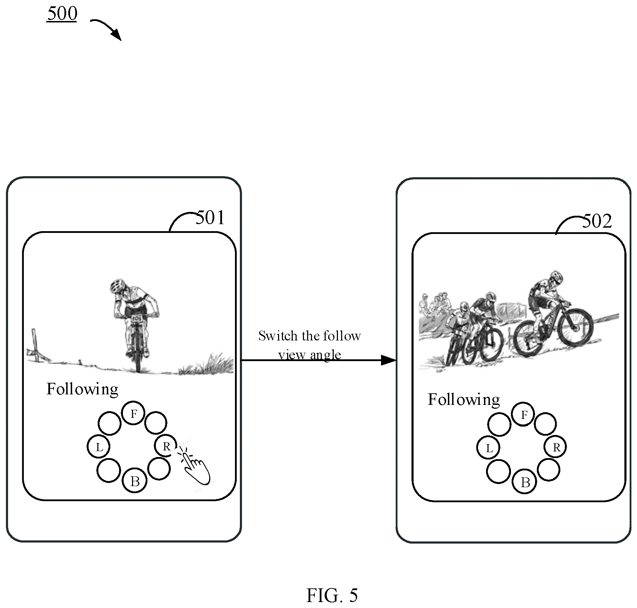

FIG. 5 schematically shows a diagram 500 of switching the follow position in the follow mode, according to some implementations of the present disclosure.

As shown in FIG. 5, the follow view angle switching interface displayed in the visual interface 501 can include 8 view angles, namely the front view angle (F), rear view angle (B), left view angle (L), right view angle (R) of the target object, as well as the left front view angle, left rear view angle, right front view angle, and right rear view angle.

When the user clicks the right view angle (R), it means that the panoramic UAV needs to change from the current follow view angle to the right view angle of the target object, and the display screen 502 corresponding to the changed target follow view angle is displayed via the visual interface.

According to the implementations of the present disclosure, in the automatic follow mode, the user can flexibly switch among multiple follow view angles by touch screen operation on the visual interface, which is convenient for viewing the display screens of different follow view angles and further improves the visual experience.

In the automatic follow mode, the user can also use the control terminal to switch to the surround mode to control the panoramic UAV to surround the following target for one or more circles, increasing the fun of the following function.

According to the implementations of the present disclosure, the above method can further include the following operations: in response to a trigger operation for the surround mode, displaying a switching interface for candidate relative position relationships via the visual interface, so as to determine the target relative position relationship from the switching interface.

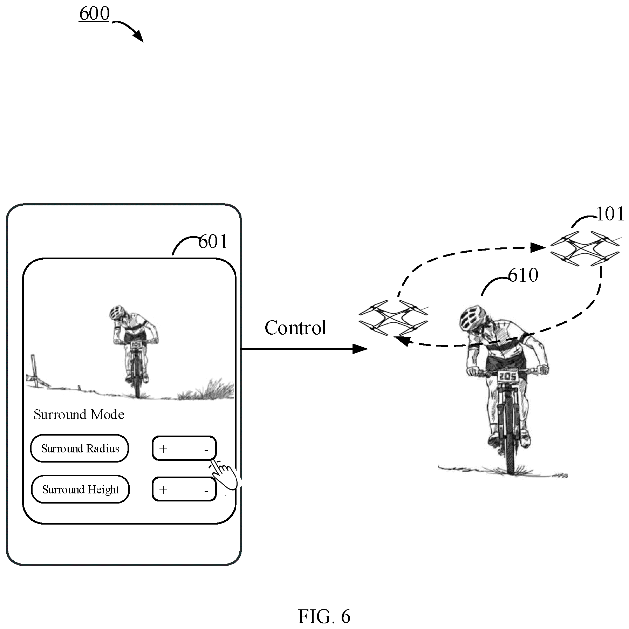

FIG. 6 schematically shows a diagram 600 of controlling the panoramic UAV to fly around the target object based on the surround radius and surround height selected by the user, according to some implementations of the present disclosure.

The user can select the surround mode based on the follow mode switching interface described above. After the user selects the surround mode, the operation for the surround mode is triggered, and the panoramic UAV can be controlled to fly around the target object for one or more circles according to the predetermined surround parameters.

In some implementations, after the user selects the surround mode, a surround parameter setting interface 601 as shown in FIG. 6 can be displayed via the visual interface. The surround parameters can include the surround radius and surround height. The user can click the "+" or "-" to adjust the flight height and surround radius of the panoramic UAV when performing the surround flight task, so as to control the panoramic UAV 101 to fly around the target object 610 according to the user-defined surround parameters.

For example, in the final sprint stage of a cycling race, after the target object crosses the finish line, the panoramic UAV can be controlled to fly around the target object for one circle.

By realizing the customization of surround parameters via the visual interface, the flexibility of the user in controlling the panoramic UAV in the surround mode is further improved, and the fun of the following function is also increased.

In the automatic follow mode, the control terminal is in a preset locked state. If it is desired to release the preset locked state, in addition to switching the follow mode via the visual interface, the preset locked state can also be released based on the following operations, so that the operation of changing the follow target or changing the follow position can be performed.

In some implementations, releasing the preset locked state requires simultaneously satisfying the following two conditions: the control terminal is aligned with the UAV for more than a predetermined duration; and a trigger operation for releasing the preset locked state is detected. For example, the trigger operation can be that the throttle button configured on the control terminal is pressed and not released.

According to the implementations of the present disclosure, releasing the preset locked state of the control terminal can include the following operations: in the automatic follow mode, in response to detecting a trigger operation for releasing the preset locked state and a duration of the control terminal being aligned with the panoramic UAV is longer than a preset duration, triggering the response signal and releasing the preset locked state.

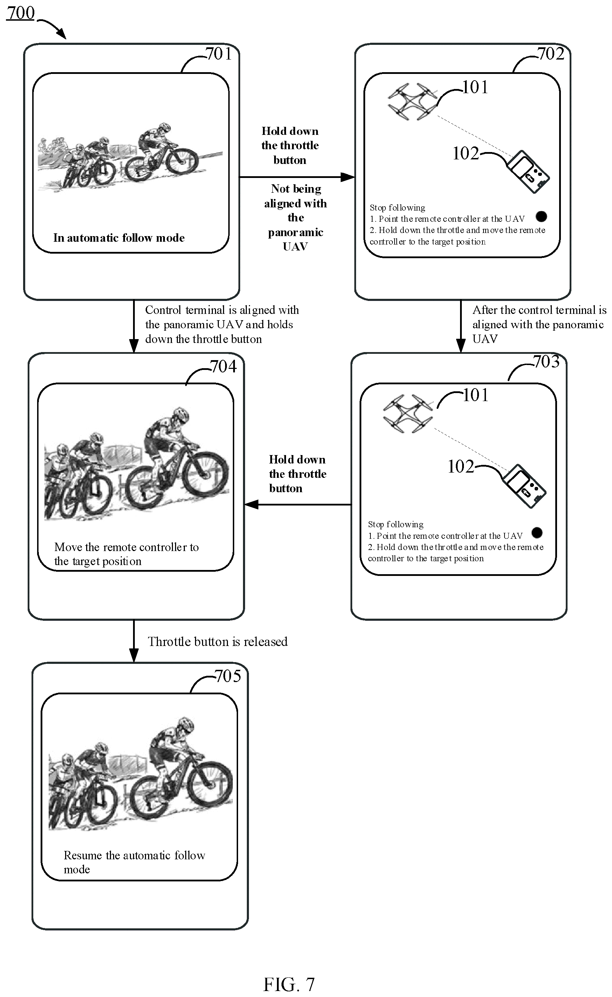

FIG. 7 schematically shows an interaction diagram 700 of releasing the preset locked state in the automatic follow mode, according to some implementations of the present disclosure.

As shown in FIG. 7, the visual interface 701 displays that it is currently in automatic follow mode. When it is detected that the user holds down the throttle button and the control terminal is aligned with the panoramic UAV for more than 500 ms, a response signal can be triggered, such as vibration or a beep, to remind the user that the preset locked state has been released.

In the automatic follow mode, in response to detecting a trigger operation for releasing the preset locked state and the control terminal not being aligned with the panoramic UAV within a preset period, prompting a holding object of the control terminal to adjust a pose of the control terminal until the adjusted control terminal is aligned with the panoramic UAV, triggering the response signal and releasing the preset locked state.

In some implementations, a first prompt screen can be displayed via the visual interface to prompt the user to adjust the pose of the control terminal, where the first prompt screen includes a schematic diagram of the control terminal being aligned with the panoramic UAV.

As shown in FIG. 7, the visual interface 702 displays a schematic diagram for prompting the user on how to adjust the pose of the control terminal 102 so that the control terminal 102 is aligned with the panoramic UAV 101. In this schematic diagram, the current follow state of the panoramic UAV can also be displayed as stop following, as well as operation prompt information for releasing the preset locked state and changing the follow position: "1. Point the remote controller at the UAV. 2. Hold down the throttle and move the remote controller to the target position."

By intuitively displaying the specific operation for releasing the locked state to the user through the first prompt screen, the user's operation difficulty is further reduced, and the operation efficiency for releasing the locked state is improved.

In the automatic follow mode, in response to detecting that the control terminal is aligned with the panoramic UAV and no trigger operation for releasing the preset locked state is detected within a preset period, prompting the holding object to perform the trigger operation for releasing the preset locked state until the response signal is triggered and the preset locked state is released.

In some implementations, a second prompt screen can be displayed via the visual interface to prompt the user to perform the trigger operation for releasing the locked state, where the second prompt screen includes a schematic diagram of the control terminal being aligned with the panoramic UAV, prompt information indicating that the control terminal is aligned with the panoramic UAV, and prompt information for the trigger operation for releasing the preset locked state.

As shown in FIG. 7, the visual interface 703 displays the second prompt screen for prompting the user to perform the trigger operation for releasing the locked state. In the second prompt screen, the operation already completed by the user, such as "remote controller aligned with UAV," is marked, indicating that the panoramic UAV 101 and the control terminal 102 are aligned.

In some implementations, when it is detected that the control terminal 102 is aligned with the panoramic UAV for more than 500 ms and the throttle button is pressed, the visual interface 704 is displayed within 10 seconds, displaying the prompt information "move the remote controller to the target position" to prompt the user to change the follow direction.

According to the implementations of the present disclosure, according to the user's operation state, the visual interface timely displays prompt operations that match the user's operation intention, reducing the user's operation difficulty. Moreover, by prompting the user's operation in the form of a schematic diagram combined with operation prompt information, it is more convenient for the user to understand the semantics of the prompt operation, improving the operation efficiency of releasing the locked state.

When encountering an emergency obstacle avoidance scenario, when an obstacle that is difficult to avoid appears in the forward direction of the panoramic UAV, an emergency obstacle avoidance operation can also be triggered to release the preset locked state, so as to improve the flight safety of the panoramic UAV.

According to the implementations of the present disclosure, in response to detecting that the control terminal is in the preset locked state and an emergency obstacle avoidance operation is triggered, releasing the preset locked state of the control terminal and controlling the panoramic UAV to stop flying.

In some implementations, the emergency obstacle avoidance operation can be a preset trigger count for a physical button configured on the control terminal, for example, the control terminal can have at least one button, which can specifically include an emergency stop button, and the emergency obstacle avoidance operation can specifically be two consecutive clicks of the emergency stop button.

In some implementations, the emergency obstacle avoidance operation can be a preset trigger frequency for a physical button configured on the control terminal, for example, the frequency of clicking the emergency stop button exceeds 5 times within 1 second.

In some implementations, the emergency obstacle avoidance operation can be a preset trigger duration for a physical button configured on the control terminal, for example, holding down the emergency stop button for more than 2 seconds.

In some implementations, the emergency obstacle avoidance operation can be a preset combination trigger operation of different buttons for a physical button configured on the control terminal, for example, pressing the emergency stop button and the track button at the same time.

According to the implementations of the present disclosure, by triggering the emergency obstacle avoidance operation to release the preset locked state, the flight safety of the panoramic UAV can be improved, and the impact of the unlocking operation duration on the obstacle avoidance operation of the panoramic UAV can be reduced.

After releasing the preset locked state, the user can use the control terminal to change the follow direction of the panoramic UAV to enrich the captured images.

According to the implementations of the present disclosure, in response to detecting a release of the preset locked state of the control terminal, adjusting the follow direction of the panoramic UAV for the target object using the control terminal; and controlling the panoramic UAV to follow the target object based on the adjusted follow direction.

In some implementations, in response to detecting that the control terminal moves in a preset direction, the panoramic UAV can be controlled to move in the preset direction.

For example, the user can move the control terminal up, down, left, or right, and correspondingly, the panoramic UAV moves up, down, left, or right.

In some implementations, in response to detecting the performance of a preset action for a control component configured on the control terminal, the distance between the panoramic UAV and a holding object of the control terminal can be adjusted.

According to the implementations of the present disclosure, the control component includes at least one of the following: a scroll wheel, a joystick, or a slider key.

For example, when the user operates the scroll wheel to scroll to the right, or operates the joystick to push up, or moves the slider key up, the distance between the panoramic UAV and the user is increased. When the user operates the scroll wheel to scroll to the left, or operates the joystick to push down, or moves the slider key down, the distance between the panoramic UAV and the user is decreased.

During the process of adjusting the follow direction of the panoramic UAV, the visual interface 704 can display the display screen corresponding to the adjusted follow direction, so that the user can determine whether the adjustment is completed.

By changing the follow direction through physical control, somatosensory control, or a combination of multiple controls, the user's needs are met, and the fun of operation is increased.

After the adjustment is completed, the panoramic UAV can be controlled to follow the target object based on the adjusted follow direction. For example, in response to a trigger operation for the adjusted follow direction, resuming the automatic follow mode, and controlling the panoramic UAV to follow the target object based on the adjusted follow direction.

In some implementations, the trigger operation can be a trigger operation for a visual interface configured on the control terminal, such as touching the screen, sliding the screen, etc.

In some implementations, the trigger operation can be a trigger operation for a button configured on the control terminal, such as releasing the throttle button.

As shown in FIG. 7, when the throttle button is released, the visual interface 705 displays the display screen corresponding to the target position and resumes the automatic follow mode.

After adjusting the follow direction, the automatic follow mode can be resumed through a simple trigger operation, reducing the complexity of the operation.

After releasing the preset locked state, in addition to changing the follow direction, the follow target can also be changed.

According to the implementations of the present disclosure, the above method can further include the following operations: in response to a trigger operation for changing a follow target, controlling the panoramic UAV to release the follow state for the target object; determining a changed object based on a second panoramic image captured by the panoramic UAV at a moment of releasing the follow; and controlling the panoramic UAV to follow the changed object.

In some implementations, the trigger operation for changing the follow target can be a duration of a trigger operation for a button configured on the control terminal is longer than a preset threshold, for example, holding down the track button for more than 5 seconds.

In some implementations, the trigger operation for changing the follow target can also be a duration of a trigger operation for the visual interface configured on the control terminal is longer than the preset threshold, for example, clicking the position of the target object in the visual interface for more than 5 seconds.

In some implementations, the trigger operation for changing the follow target can also be matching a current pose of a holding object of the control terminal with a second preset pose. For example, the second preset pose can be the pose of the holding object of the control terminal jumping in place. When the user holds the control terminal and jumps in place, the operation for changing the follow target is triggered.

When the panoramic UAV is controlled to release the follow state for the target object, the second panoramic image captured by the panoramic UAV at the moment of releasing the follow is obtained. The changed object is determined based on the second panoramic image according to any of the methods described above for determining the target object based on the first panoramic image, and the panoramic UAV is controlled to follow the changed object, which will not be repeated here.

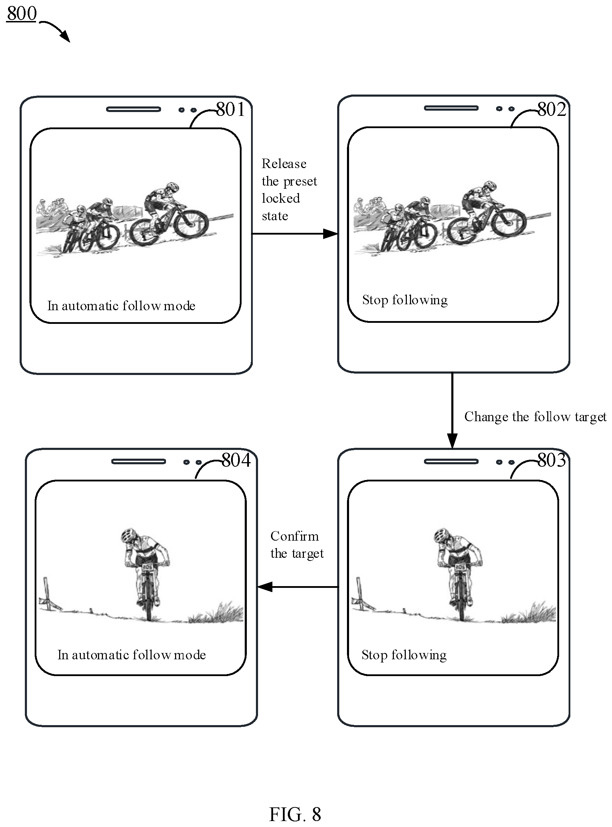

FIG. 8 schematically shows a diagram 800 of changing the follow target after releasing the preset locked state in the automatic follow mode, according to some implementations of the present disclosure.

As shown in FIG. 8, the visual interface 801 displays the follow screen in the automatic follow mode. After releasing the preset locked state, the visual interface 802 displays the stop following information. At this time, the user can change the follow target according to the method described above, and the visual interface 803 displays the screen of the changed object. After the user confirms the target, for example, by clicking the track button, the automatic follow state with the changed target object as the follow target is entered, and the visual interface 804 displays the screen of the changed object.

According to the implementations of the present disclosure, in the automatic follow mode, the follow target can be flexibly changed through physical control, somatosensory control, and other methods, meeting the user's need to flexibly change the follow target during the follow shooting process to enrich the video content.

After the panoramic UAV successfully completes the target following task, the user can trigger the exit operation of the target tracking function, for example, by clicking the exit button, etc., to normally exit the target following function.

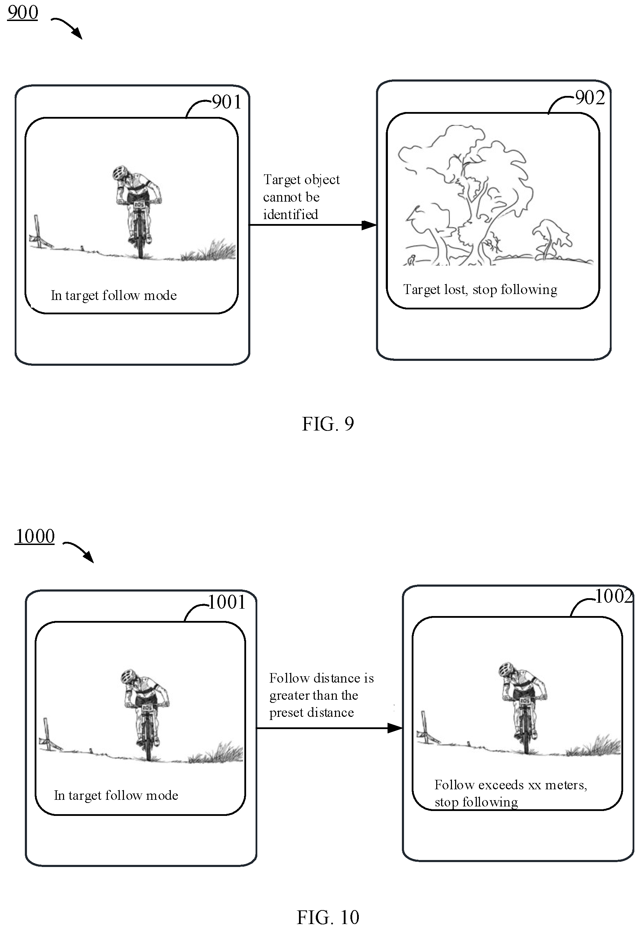

When the panoramic UAV encounters the following abnormal situations during the execution of the target following task, it will exit the target following function abnormally. The following will describe in detail examples of abnormal exit of the target following function with reference to FIGs. 9 to 12.

In some implementations, in response to detecting that the target object is not identified in the visual interface of the control terminal within a preset duration, controlling the panoramic UAV to hover and terminating the target follow mode; and displaying an image corresponding to a preset view angle of the panoramic UAV and an alert message for prompting a failure of the target follow via the visual interface.

FIG. 9 schematically shows a diagram 900 of terminating following when the target cannot be identified in the panoramic image, according to some implementations of the present disclosure.

As shown in FIG. 9, the visual interface 901 displays the follow screen in the target follow mode. When the target object moves to an area where the color of the environment is very close to the color of the target object, for example, when the target object wearing green clothes passes through a grassland, the target object cannot be identified during image recognition because the color of the target object is very close to the background color. At this time, the panoramic UAV can be controlled to hover at the position where the target cannot be identified and terminate the target follow mode. In addition, the visual interface 902 displays the image corresponding to the preset view angle of the panoramic UAV, for example, the image corresponding to the head direction, and displays the alert message "target lost, stop following" to remind the user to reacquire the panoramic image and change the follow target.

According to the implementations of the present disclosure, when the target cannot be identified, following is terminated in time, and an alert message is displayed via the visual interface to promptly remind the user to perform corresponding adjustment operations, which can reduce the probability of invalid shooting and ensure the flight safety of the panoramic UAV.

In some implementations, in response to detecting that a follow distance of the panoramic UAV for the target object is greater than a preset distance, terminating the target follow mode; and displaying an image corresponding to the follow view angle and an alert message for prompting the follow distance via the visual interface.

FIG. 10 schematically shows a diagram 1000 of terminating following when the follow distance is greater than a preset distance, according to some implementations of the present disclosure.

As shown in FIG. 10, the visual interface 1001 displays the follow screen in the target follow mode. During the follow flight, the follow distance can be recorded. When it is detected that the follow distance is greater than the preset distance, the target follow mode can be terminated, and the visual interface 1002 displays the image corresponding to the follow view angle and the alert message "follow exceeds xx meters, stop following" to remind the user that the target has been followed beyond the distance.

According to the implementations of the present disclosure, when the follow distance exceeds the preset distance, following is terminated in time, and an alert message is displayed via the visual interface to promptly remind the user, reducing the probability of user violation operations.

In some implementations, in response to detecting an abnormal flight of the panoramic UAV, terminating the target follow mode; and displaying an alert message for prompting the abnormal flight via the visual interface.

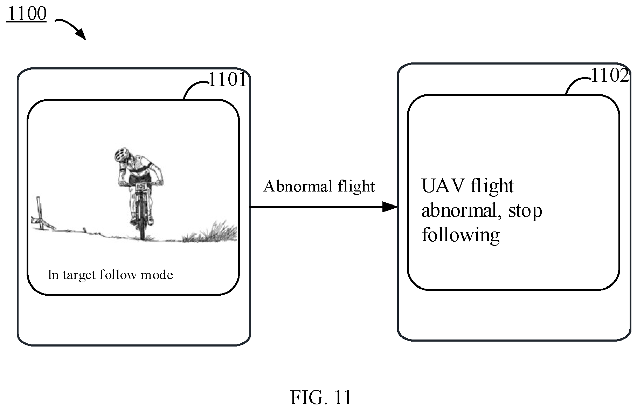

FIG. 11 schematically shows a diagram 1100 of terminating following when the panoramic UAV is flying abnormally, according to some implementations of the present disclosure.

As shown in FIG. 11, the visual interface 1101 displays the follow screen in the target follow mode. When it is detected that the basic flight capability of the panoramic UAV is abnormal, for example, mechanical component damage or communication response failure, etc., the target follow mode can be terminated, and the visual interface displays "UAV flight abnormal, stop following" to remind the user to stop using the UAV in time, so as to minimize the damage to the surrounding environment caused by the abnormal flight of the UAV and reduce the damage range of the functional components that cause the abnormal flight of the UAV.

In some implementations, when the panoramic UAV is performing the target following task, in response to identifying an obstacle in a forward area of the panoramic UAV, pausing the target follow mode; and displaying an operation path for prompting to bypass the obstacle via the visual interface, so as to control the panoramic UAV to avoid the obstacle using the control terminal based on the operation path and resume the target follow mode.

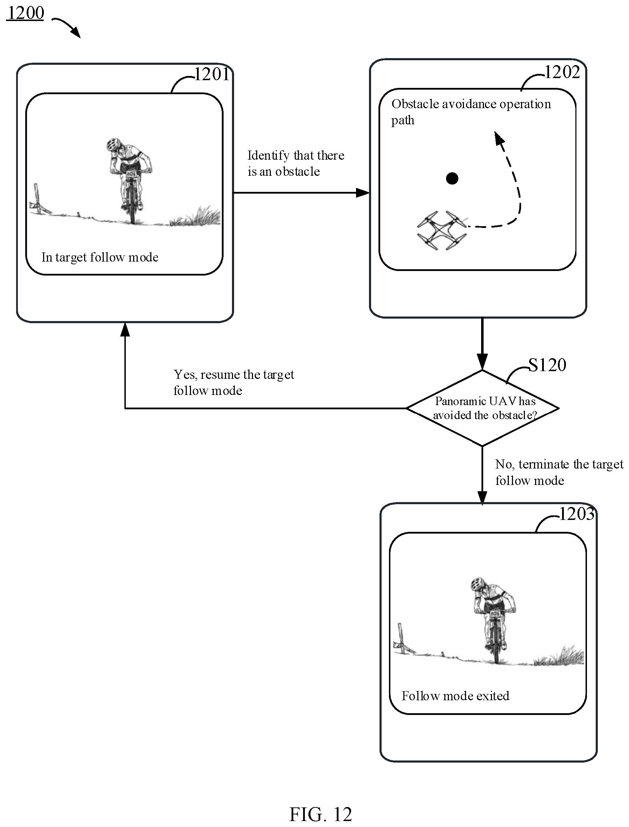

FIG. 12 schematically shows a diagram 1200 of an obstacle avoidance scenario during the following process of the panoramic UAV, according to some implementations of the present disclosure.

As shown in FIG. 12, the visual interface 1201 displays the follow screen in the target follow mode. When it is identified that there is an obstacle in the forward area of the panoramic UAV, the target follow mode is paused, and the visual interface 1202 displays the obstacle avoidance operation path to prompt the user to use the control terminal to control the panoramic UAV to avoid the obstacle based on the operation path.

According to the implementations of the present disclosure, when an obstacle is identified in the forward area of the panoramic UAV, the obstacle avoidance operation path is intuitively displayed to the user via the visual interface, reducing the trial-and-error cost of the user repeatedly attempting obstacle avoidance and gaining time for the panoramic UAV to avoid the obstacle in time.

In some implementations, in response to identifying the obstacle in the forward area of the panoramic UAV and detecting that the panoramic UAV has avoided the obstacle within a preset duration, controlling the panoramic UAV to follow the target object according to the target follow mode.

For example, after identifying the obstacle, when it is detected that the panoramic UAV has avoided the obstacle within a preset duration, such as 5 seconds, the target follow mode is resumed.

If the user successfully avoids the obstacle manually within the preset duration, the target follow mode can be automatically resumed without reselecting the follow target and follow mode, reducing the user's operation burden.

In some implementations, in response to identifying the obstacle in the forward area of the panoramic UAV and not detecting that the panoramic UAV has avoided the obstacle within a preset duration, terminating the target follow mode; and displaying prompt information for indicating that the target follow mode has been exited via the visual interface.

For example, after identifying the obstacle, when it is not detected that the panoramic UAV has avoided the obstacle within a preset duration, such as 5 seconds, the target follow mode is terminated. The visual interface 1203 displays "follow mode exited," and the visual interface 1203 can display the screen corresponding to the follow view angle when the obstacle is detected.

According to the implementations of the present disclosure, when the user fails to avoid the obstacle within the preset duration, the target follow mode is terminated in time, and the panoramic UAV can hover at the position where the obstacle is identified to ensure the flight safety of the panoramic UAV.

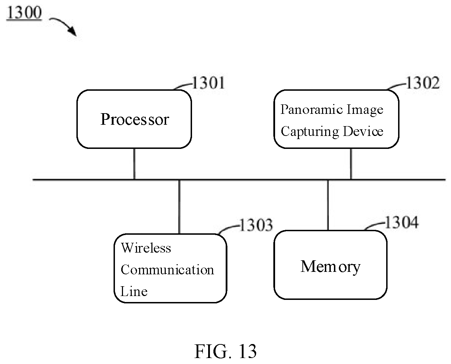

FIG. 13 schematically shows a block diagram of the panoramic UAV, according to some implementations of the present disclosure.

As shown in FIG. 13, the panoramic UAV 1300 can include a processor 1301, a panoramic image capturing device 1302, a wireless communication line 1303, and a memory 1304.

The panoramic image capturing device 1302 is configured to capture a panoramic image.

The wireless communication line 1303 is configured to send the panoramic image and obtain a control command; the control command is generated by a control terminal of the panoramic UAV by obtaining the panoramic image, and after, in response to a trigger operation for a target following function, determining a target object based on the panoramic image. The control command can be generated by the control terminal described above or by the server.

The processor 1301 is configured to follow the target object based on the control command.

The memory 1304 is configured to store the control command.

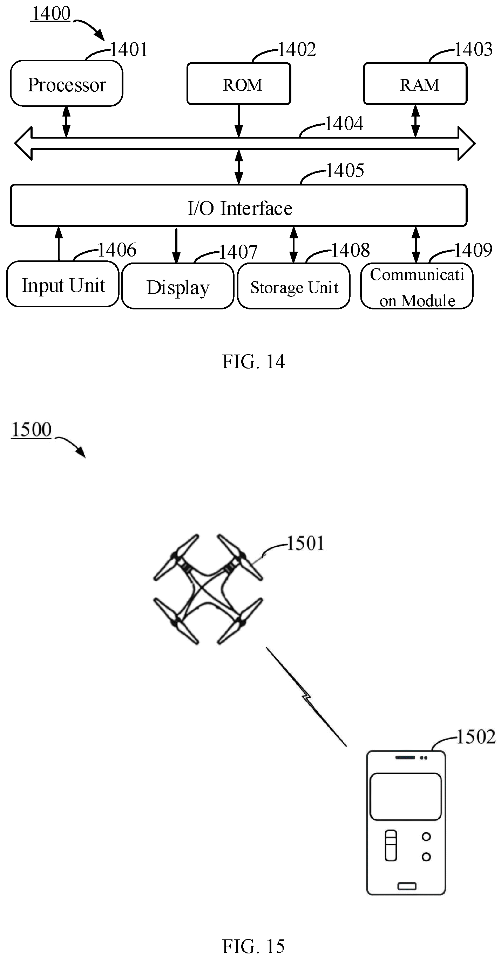

FIG. 14 schematically shows a block diagram of the control terminal, according to some implementations of the present disclosure.

FIG. 14 shows a schematic block diagram of an exemplary control terminal 1400 that can be configured to implement the implementations of the present disclosure, for example, a somatosensory remote controller. The components, their connections and relationships, and their functions shown herein are merely examples and are not intended to limit the implementations of the present disclosure described and/or claimed herein.

As shown in FIG. 14, the control terminal 1400 includes a processor 1401, which can include one or more processors, which can work individually or collectively. The processor 1401 can perform various appropriate actions and processing according to a computer program stored in a read-only memory (ROM) 1402 or a computer program loaded from a storage unit 1408 into a random access memory (RAM) 1403, for example, the memory can store instructions executable by the processor, and the instructions, when executed by the processor, cause the processor to, in response to a trigger operation for a target following function, determine a target object based on the first panoramic image; and control the panoramic UAV to follow the target object.

In some implementations, the trigger operation for the target following function can include at least one of the following: a trigger operation for a button configured on the control terminal; a trigger operation for a visual interface configured on the control terminal; matching a current pose of a holding object of the control terminal with a first preset pose.

Various programs and data required for the operation of the device 1400 can also be stored in the RAM 1403. The processor 1401, ROM 1402, and RAM 1403 are connected to each other via a bus 1404. An input/output (I/O) interface 1405 is also connected to the bus 1404.

Multiple components in the control terminal 1400 are connected to the I/O interface 1405, including: an input unit 1406, such as a keyboard, mouse, etc.; a display 1407, which can be configured to display a visual interface; a storage unit 1408, such as a disk, optical disk, etc.; and a communication module 1409, such as a network card, modem, wireless communication transceiver, etc. The communication module 1409 allows the device 1400 to exchange information/data with other devices via a computer network such as the Internet and/or various telecommunication networks, for example, the communication module is configured to obtain a first panoramic image captured by the panoramic UAV.

The processor 1401 can be various general and/or special processing components with processing and computing capabilities. Some examples of the processor 1401 include but are not limited to a central processing unit (CPU), a graphics processing unit (GPU), various dedicated artificial intelligence (AI) computing chips, various processors running machine learning model algorithms, a digital signal processor (DSP), and any suitable processor, controller, microcontroller, etc. The processor 1401 executes the various methods and processing described above, for example, the target following method for a panoramic UAV. For example, in some implementations, the target following method for a panoramic UAV can be implemented as a computer software program, which is tangibly contained in a machine-readable medium, such as the storage unit 1408. In some implementations, part or all of the computer program can be loaded and/or installed on the device 1400 via the ROM 1402 and/or the communication module 1409. When the computer program is loaded into the RAM 1403 and executed by the processor 1401, one or more operations of the target following method for a panoramic UAV described above can be performed. In some implementations, in other implementations, the processor 1401 can be configured to perform the target following method for a panoramic UAV in any other suitable manner (for example, by means of firmware).

In some implementations, when the processor determines the target object based on the first panoramic image, it is configured to: determine a first image based on the first panoramic image, the first image corresponding to a predetermined display view angle of the first panoramic image; control the display to display the first image via the visual interface; and in response to identifying an expected target for the first image, determine the expected target as the target object.

For example, the predetermined display view angle can include any of the following: a view angle corresponding to a somatosensory pose of the control terminal; a view angle determined based on a trigger operation for any candidate view angle in the visual interface by a user; or a preset view angle corresponding to a flight direction of the panoramic UAV.

In some implementations, the processor is further configured to: in response to failing to identify the expected target for the first image, determine the target object from a holding object of the control terminal and a user selection object as determined according to the first image, where the holding object of the control terminal has a higher priority.

For example, the target object is determined by at least one of the following operations: a trigger operation for a button configured on the control terminal; or a trigger operation for the visual interface configured on the control terminal.

In some implementations, the processor is further used to: in a case where the expected target is not identified in the first image, adjust the predetermined display view angle and control the display to display a second image via the visual interface, so that the expected target is included in the adjusted second image corresponding to the adjusted display view angle.

In some implementations, when the processor adjusts the predetermined display view angle, it is used to: in response to a trigger operation for adjusting the predetermined display view angle, adjust the predetermined display view angle. For example, the trigger operation includes at least one of the following: a trigger operation for a control component configured on the control terminal; or a trigger operation for the visual interface configured on the control terminal, where the control component includes at least one of the following: a joystick, a scroll wheel, or a preset button.

In some implementations, the processor is further configured to: in a case where it is determined that the first image or the second image includes a plurality of candidate objects, obtaining a display proportion of each candidate object in the first image or the second image; and based on the display proportion, determining the expected target from the plurality of candidate objects.

In some implementations, the processor is further configured to: in a case where it is determined that the first image or the second image includes a plurality of candidate objects, obtaining a display position of each candidate object in the first image or the second image; and based on the display position, determining the expected target from the plurality of candidate objects.

In some implementations, after the processor determines the holding object of the control terminal as the target object, the processor is further configured to: determine a third image in the first panoramic image; and control the display to display the third image via the visual interface, where the holding object is displayed in a centered manner in the third image.

In some implementations, the processor is further configured to: control the display to display a follow mode switching interface via the visual interface; in response to a trigger operation for any follow mode in the follow mode switching interface, enter a target follow mode.

For example, the target follow mode includes any of the following: an automatic follow mode, a visual lock follow mode, or a surround follow mode.

In some implementations, when the processor controls the panoramic UAV to follow the target object, it is configured to control the panoramic UAV to follow the target object and capture or record the target object.

In some implementations, when the processor controls the panoramic UAV to follow the target object and capture or record, it is configured to: in the automatic follow mode, control the control terminal to be in a preset locked state, adjust a position of the panoramic UAV based on a relative position between the target object and the panoramic UAV, and control the panoramic UAV to capture or record the target object; in the view angle lock mode, adjust a relative position between the target object and the panoramic UAV using the control terminal and control the panoramic UAV to capture or record the target object, so that a display view angle corresponding to a display screen on the control terminal is locked with the target object; or in the surround mode, control the panoramic UAV and the target object to surround the target object in a target relative position relationship and control the panoramic UAV to capture or record the target object.

For example, the control terminal being in a preset locked state can include at least one of the following: buttons configured on the control terminal (except the preset button) are in a locked state. For example, the preset button is configured to trigger at least one of the following: a capturing operation, a recording operation, an emergency obstacle avoidance operation, or a flight pose control operation. A somatosensory control operation of a holding object of the control terminal for the panoramic UAV is in a locked state.

In some implementations, the processor is further configured to: control the display to display a follow view angle switching interface via the visual interface; and in response to a trigger operation for a target follow view angle, control the display to display a display screen corresponding to the target follow view angle via the visual interface.

In some implementations, the processor is further configured to: in response to a trigger operation for the surround mode, control the display to display a switching interface for candidate relative position relationships via the visual interface, so as to determine the target relative position relationship from the switching interface.

In some implementations, the processor is further configured to: in response to detecting a release of the preset locked state of the control terminal, adjust the follow direction of the panoramic UAV for the target object using the control terminal; and control the panoramic UAV to follow the target object based on the adjusted follow direction.

In some implementations, the processor is further configured to: in response to detecting that the control terminal moves in a preset direction, control the panoramic UAV to move in the preset direction; and in response to detecting a performance of a preset action for a control component configured on the control terminal, adjust a distance between the panoramic UAV and a holding object of the control terminal.

For example, the control component can include at least one of the following: a scroll wheel, a joystick, or a slider key.

In some implementations, when the processor controls the panoramic UAV to follow the target object based on the adjusted follow direction, it is configured to: in response to a trigger operation for the adjusted follow direction, resume the automatic follow mode, and control the panoramic UAV to follow the target object based on the adjusted follow direction.

For example, the trigger operation can include at least one of the following: a trigger operation for a button configured on the control terminal; or a trigger operation for the visual interface configured on the control terminal.

In some implementations, the processor is further configured to: in response to a trigger operation for changing a follow target, control the panoramic UAV to release the follow state for the target object; determine a changed object based on a second panoramic image captured by the panoramic UAV at a moment of releasing the follow; and control the panoramic UAV to follow the changed object.

For example, the trigger operation for changing the follow target can include at least one of the following: a duration of a trigger operation for a button configured on the control terminal is longer than a preset threshold; a duration of a trigger operation for the visual interface configured on the control terminal is longer than the preset threshold; or matching a current pose of a holding object of the control terminal with a second preset pose.

In some implementations, when the processor releases the preset locked state of the control terminal, it is configured to: in the automatic follow mode, in response to detecting a trigger operation for releasing the preset locked state and a duration of the control terminal being aligned with the panoramic UAV is longer than a preset duration, trigger the response signal and release the preset locked state.

In some implementations, when the processor releases the preset locked state of the control terminal, it is configured to: in the automatic follow mode, in response to detecting a trigger operation for releasing the preset locked state and the control terminal not being aligned with the panoramic UAV within a preset period, prompt a holding object of the control terminal to adjust a pose of the control terminal until the adjusted control terminal is aligned with the panoramic UAV, triggering the response signal and releasing the preset locked state.

In some implementations, when the processor releases the preset locked state of the control terminal, it is configured to: in the automatic follow mode, in response to detecting that the control terminal is aligned with the panoramic UAV and no trigger operation for releasing the preset locked state is detected within a preset period, prompt the holding object to perform the trigger operation for releasing the preset locked state until the response signal is triggered and the preset locked state is released.

In some implementations, the processor is further configured to: in response to detecting that the control terminal is in the preset locked state and an emergency obstacle avoidance operation is triggered, release the preset locked state of the control terminal and control the panoramic UAV to stop flying.

For example, the emergency obstacle avoidance operation can include at least one of the following: a preset trigger count, a preset trigger frequency, a preset trigger duration, or a preset combination trigger operation of different buttons for a physical button configured on the control terminal.

In some implementations, the processor is further configured to: in response to detecting that the target object is not identified in the visual interface of the display within a preset duration, control the panoramic UAV to hover and terminate the target follow mode; and control the display to display an image corresponding to a preset view angle of the panoramic UAV and an alert message for prompting a failure of the target follow via the visual interface.

In some implementations, the processor is further configured to: in response to detecting that a follow distance of the panoramic UAV for the target object is greater than a preset distance, terminate the target follow mode; and control the display to display an image corresponding to the follow view angle and an alert message for prompting the follow distance via the visual interface.

In some implementations, the processor is further configured to: in response to detecting an abnormal flight of the panoramic UAV, terminate the target follow mode; and control the display to display an alert message for prompting the abnormal flight via the visual interface.

In some implementations, the processor is further configured to: in response to identifying an obstacle in a forward area of the panoramic UAV, pause the target follow mode; and control the display to display an operation path for prompting to bypass the obstacle via the visual interface, so as to control the panoramic UAV to avoid the obstacle using the control terminal based on the operation path and resume the target follow mode.

In some implementations, the processor is further configured to: in response to identifying the obstacle in the forward area of the panoramic UAV and not detecting that the panoramic UAV has avoided the obstacle within a preset duration, terminate the target follow mode; and control the display to display prompt information for indicating that the target follow mode has been exited via the visual interface.

In some implementations, the processor is further configured to: in response to identifying the obstacle in the forward area of the panoramic UAV and detecting that the panoramic UAV has avoided the obstacle within a preset duration, control the panoramic UAV to follow the target object according to the target follow mode.

The various implementations of the systems and technologies described above can be implemented in digital electronic circuit systems, integrated circuit systems, field programmable gate arrays (FPGA), application-specific integrated circuits (ASIC), application-specific standard products (ASSP), system-on-chip (SOC), complex programmable logic devices (CPLD), computer hardware, firmware, software, and/or combinations thereof. These various implementations can include: implemented in one or more computer programs, the one or more computer programs can be executed and/or interpreted on a programmable system including at least one programmable processor, which can be a dedicated or general-purpose programmable processor, can receive data and instructions from a storage system, at least one input device, and at least one output device, and transmit data and instructions to the storage system, the at least one input device, and the at least one output device.

The program code for implementing the method of the present disclosure can be written in any combination of one or more programming languages. The program code can be provided to a general-purpose computer, a special-purpose computer, or other programmable data processing device's processor or controller, so that when the program code is executed by the processor or controller, the functions/operations specified in the flowcharts and/or block diagrams are implemented. The program code can be executed entirely on the machine, partly on the machine, partly on the machine as a separate software package and partly on a remote machine, or entirely on a remote machine or server.

In the context of the present disclosure, a machine-readable medium can be a tangible medium that can contain or store a program for use by or in connection with an instruction execution system, device, or equipment. The machine-readable medium can be a machine-readable signal medium or a machine-readable storage medium. The machine-readable medium can include but is not limited to electronic, magnetic, optical, electromagnetic, infrared, or semiconductor systems, devices, or equipment, or any suitable combination of the above. More specific examples of machine-readable storage media include electrical connections based on one or more wires, portable computer disks, hard disks, random access memory (RAM), read-only memory (ROM), erasable programmable read-only memory (EPROM or flash memory), optical fiber, portable compact disc read-only memory (CD-ROM), optical storage devices, magnetic storage devices, or any suitable combination of the above.

To provide interaction with the user, the systems and technologies described herein can be implemented on a computer having: a display device (for example, a CRT (cathode ray tube) or LCD (liquid crystal display) monitor) for displaying information to the user; and a keyboard and a pointing device (for example, a mouse or trackball), through which the user can provide input to the computer. Other types of devices can also be configured to provide interaction with the user; for example, feedback provided to the user can be any form of sensory feedback (for example, visual feedback, auditory feedback, or tactile feedback); and input from the user can be received in any form (including voice input, speech input, or tactile input).

The systems and technologies described herein can be implemented in a computing system including backend components (for example, as a data server), or middleware components (for example, an application server), or frontend components (for example, a user computer with a graphical user interface or web browser, through which the user can interact with the implementations of the systems and technologies described herein), or any combination of such backend, middleware, or frontend components. The components of the system can be interconnected by any form or medium of digital data communication (for example, a communication network). Examples of communication networks include: local area networks (LAN), wide area networks (WAN), and the Internet.

The computer system can include clients and servers. The client and server are generally remote from each other and typically interact through a communication network. The relationship between the client and server is generated by computer programs running on the respective computers and having a client-server relationship with each other. The server can be a cloud server, a server of a distributed system, or a server combined with blockchain.

FIG. 15 schematically shows a diagram of a flight system, according to some implementations of the present disclosure.

As shown in FIG. 15, the flight system 1500 can include the panoramic UAV 1501 in any of the implementations described above and the control terminal 1502 in any of the implementations described above.

The panoramic UAV 1501 is configured to capture a first panoramic image; send the first panoramic image to the control terminal; and receive a first control command from the control terminal to follow a target object based on the first control command.

The control terminal 1502 is configured to obtain the first panoramic image; in response to a trigger operation for a target following function, determine the target object based on the first panoramic image; generate a first control command for controlling the panoramic UAV to follow the target object based on the target object; and send the first control command to the panoramic UAV.

In some implementations, for example, in the scenario of changing the follow target, the control terminal is further configured to, in response to a trigger operation for changing a follow target, control the panoramic UAV to release the follow state for the target object; obtain a second panoramic image captured by the panoramic UAV at a moment of releasing the follow; determine a changed object based on the second panoramic image; and generate a second control command based on the changed object. The panoramic UAV is further configured to capture a second panoramic image; send the second panoramic image to the control terminal; and receive a second control command from the control terminal to follow the changed object based on the second control command.

In some implementations, for example, when the follow target cannot be identified, the control terminal is further configured to, in response to detecting that the target object is not identified in the visual interface of the control terminal within a preset duration, send a third control command for controlling the panoramic UAV to hover and terminate the target follow mode to the panoramic UAV; and display an image corresponding to a preset view angle of the panoramic UAV and an alert message for prompting a failure of the target follow via the visual interface. The panoramic UAV is further configured to obtain the third control command, hover at a position at a moment of receiving the third control command based on the third control command, and terminate following the target object.

In some implementations, for example, when the panoramic UAV encounters an obstacle, the control terminal is further configured to, in response to identifying an obstacle in a forward area of the panoramic UAV, send a fourth control command for indicating to pause the target follow mode to the panoramic UAV; display an operation path for prompting to bypass the obstacle via the visual interface, so as to generate a fifth control command for controlling the panoramic UAV to avoid the obstacle based on a trigger operation triggered by the operation path; and in response to detecting that the panoramic UAV has avoided the obstacle, generate a sixth command for controlling the panoramic UAV to resume the target follow mode. The panoramic UAV is further configured to obtain the fourth control command, stop following the target object based on the fourth control command, obtain the fifth control command, avoid the obstacle based on the fifth control command, obtain the sixth control command, and resume following the target object based on the sixth control command.

It should be understood that the various forms of processes shown above can be reordered, steps can be added or deleted. For example, the operations described in the present disclosure can be performed in parallel, sequentially, or in a different order, as long as the desired results of the technical solutions disclosed in the present disclosure can be achieved, and the present disclosure does not limit this.

The above specific implementations do not constitute a limitation on the scope of protection of the present disclosure. Those skilled in the art should understand that various modifications, combinations, sub-combinations, and substitutions can be made according to design requirements and other factors. Any modifications, equivalent substitutions, and improvements made within the spirit and principles of the present disclosure should be included within the scope of protection of the present disclosure.

## Claims

1. A target following method for a panoramic unmanned aerial vehicle (UAV), **characterized in that** the method comprises:
obtaining a first panoramic image captured by the panoramic UAV;
in response to a trigger operation for a target following function, determining a target object based on the first panoramic image; and
controlling the panoramic UAV to follow the target object.

2. The method according to claim 1, **characterized in that** determining the target object based on the first panoramic image comprises:
determining a first image based on the first panoramic image, the first image corresponding to a predetermined display view angle of the first panoramic image;
displaying the first image via a visual interface, wherein the visual interface is configured on a control terminal of the panoramic UAV; and
in response to identifying an expected target for the first image, determining the expected target as the target object.

3. The method according to claim 2, **characterized in that** the predetermined display view angle comprises any of the following:
a view angle corresponding to a somatosensory pose of the control terminal;
a view angle determined based on a trigger operation for a candidate view angle in the visual interface by a user; or
a preset view angle corresponding to a flight direction of the panoramic UAV.

4. The method according to claim 2 or 3, **characterized in that** the method further comprises:
in response to failing to identify the expected target for the first image, determining the target object from a holding object of the control terminal and a user selection object as determined according to the first image, wherein the holding object of the control terminal has a higher priority.

5. The method according to any of claims 2 to 4, **characterized in that** the method further comprises:
in a case where the expected target is not identified in the first image, adjusting the predetermined display view angle and displaying a second image via the visual interface, so that the expected target is included in the adjusted second image corresponding to the adjusted display view angle.

6. The method according to claim 5, **characterized in that** adjusting the predetermined display view angle comprises:
in response to a trigger operation for adjusting the predetermined display view angle, adjusting the predetermined display view angle,
wherein the trigger operation comprises at least one of:
a trigger operation for a control component configured on the control terminal; or
a trigger operation for the visual interface configured on the control terminal,
wherein the control component comprises at least one of the following: a joystick, a scroll wheel, or a preset button.

7. The method according to claim 2 or 5, **characterized in that** the method further comprise:
in a case where it is determined that the first image or the second image comprises a plurality of candidate objects, obtaining a display proportion of each candidate object in the first image or the second image; and
based on the display proportion, determining the expected target from the plurality of candidate objects.

8. The method according to claim 2 or 5, **characterized in that** the method further comprises:
in a case where it is determined that the first image or the second image comprises a plurality of candidate objects, obtaining a display position of each candidate object in the first image or the second image; and
based on the display position, determining the expected target from the plurality of candidate objects.

9. The method according to claim 4, **characterized in that** the target object is determined by at least one of the following operations:
a trigger operation for a button configured on a control terminal; or
a trigger operation for a visual interface configured on the control terminal.

10. The method according to any of claims 1 to 9, **characterized in that** the trigger operation for the target following function comprises at least one of the following:
a trigger operation for a button configured on a control terminal;
a trigger operation for a visual interface configured on the control terminal; or
matching a current pose of a holding object of the control terminal with a first preset pose.

11. The method according to claim 4, **characterized in that** after determining the holding object of the control terminal as the target object, the method further comprises:
determining a third image in the first panoramic image; and
displaying the third image via the visual interface, wherein the holding object is displayed in a centered manner in the third image.

12. The method according to any of claims 1 to 11, **characterized in that** the method further comprises:
displaying a follow mode switching interface via a visual interface on a control terminal;
and
in response to a trigger operation for any follow mode in the follow mode switching interface, entering a target follow mode, wherein the target follow mode comprises any of the following: an automatic follow mode, a visual lock follow mode, or a surround follow mode.

13. The method according to any of claims 1 to 12, **characterized in that** controlling the panoramic UAV to follow the target object comprises:
controlling the panoramic UAV to follow the target object to capture or record the target object.

14. The method according to claim 13, **characterized in that** controlling the panoramic UAV to follow the target object to capture or record the target object comprises:
in an automatic follow mode, controlling a control terminal to be in a preset locked state, adjusting a position of the panoramic UAV based on a relative position between the target object and the panoramic UAV, and capturing or recording the target object;
in a view angle lock mode, adjusting a relative position between the target object and the panoramic UAV via the control terminal and capturing or recording the target object, a display view angle corresponding to a display screen on the control terminal being locked with the target object; and
in a surround mode, controlling the panoramic UAV and the target object to surround the target object in a target relative position relationship and capturing or recording the target object.

15. The method according to claim 14, **characterized in that** the control terminal being in a preset locked state comprises at least one of the following:
buttons configured on the control terminal, except the preset button, are in a locked state, wherein the preset button is configured to trigger at least one of the following: a capturing operation, a recording operation, an emergency obstacle avoidance operation, or a flight pose control operation; or
a somatosensory control operation of a holding object of the control terminal for the panoramic UAV is in a locked state.

16. The method according to claim 14, **characterized in that** the method further comprises:
displaying a follow view angle switching interface via the visual interface; and
in response to a trigger operation for a target follow view angle, displaying a display screen corresponding to the target follow view angle via the visual interface.

17. The method according to claim 13, **characterized in that** the method further comprises:
in response to a trigger operation for the surround mode, displaying a switching interface for candidate relative position relationships via the visual interface, so as to determine the target relative position relationship from the switching interface.

18. The method according to claim 13, **characterized in that** the method further comprises:
in response to detecting a release of the preset locked state of the control terminal, adjusting the follow direction of the panoramic UAV for the target object via the control terminal; and
controlling the panoramic UAV to follow the target object based on the adjusted follow direction.

19. The method according to claim 18, **characterized in that** adjusting the follow direction of the panoramic UAV for the target object via the control terminal comprises at least one of the following:
in response to detecting that the control terminal moves in a preset direction, controlling the panoramic UAV to move in the preset direction; or
in response to detecting a performance of a preset action for a control component configured on the control terminal, adjusting a distance between the panoramic UAV and a holding object of the control terminal.

20. The method according to claim 19, **characterized in that** the control component comprises at least one of the following: a scroll wheel, a joystick, or a slider key.

21. The method according to claim 19, **characterized in that** controlling the panoramic UAV to follow the target object based on the adjusted follow direction comprises:
in response to a trigger operation for the adjusted follow direction, resuming the automatic follow mode, and controlling the panoramic UAV to follow the target object based on the adjusted follow direction,
wherein the trigger operation comprises at least one of the following:
a trigger operation for a button configured on the control terminal; or
a trigger operation for the visual interface configured on the control terminal.

22. The method according to claim 13, **characterized in that** the method further comprises:
in response to a trigger operation for changing a follow target, controlling the panoramic UAV to release the follow state for the target object;
determining a changed object based on a second panoramic image captured by the panoramic UAV at a moment of releasing the follow; and
controlling the panoramic UAV to follow the changed object.

23. The method according to claim 22, **characterized in that** the trigger operation for changing the follow target comprises at least one of the following:
a duration of a trigger operation for a button configured on the control terminal being longer than a preset threshold;
a duration of a trigger operation for the visual interface configured on the control terminal being longer than the preset threshold; or
matching a current pose of a holding object of the control terminal with a second preset pose.

24. The method according to any of claims 18 to 20, **characterized in that** releasing the preset locked state of the control terminal comprises:
in the automatic follow mode, in response to detecting a trigger operation for releasing the preset locked state and a duration of the control terminal being aligned with the panoramic UAV is longer than a preset duration, triggering the response signal and releasing the preset locked state.

25. The method according to any of claims 18 to 20, **characterized in that** releasing the preset locked state of the control terminal comprises:
in the automatic follow mode, in response to detecting a trigger operation for releasing the preset locked state and the control terminal not being aligned with the panoramic UAV within a preset period, prompting a holding object of the control terminal to adjust a pose of the control terminal until the adjusted control terminal is aligned with the panoramic UAV, triggering the response signal and releasing the preset locked state.

26. The method according to any of claims 18 to 20, **characterized in that** releasing the preset locked state of the control terminal comprises:
in the automatic follow mode, in response to detecting that the control terminal is aligned with the panoramic UAV and no trigger operation for releasing the preset locked state is detected within a preset period, prompting the holding object to perform the trigger operation for releasing the preset locked state until the response signal is triggered and the preset locked state is released.

27. The method according to any of claims 13 to 26, **characterized in that** the method further comprises:
in response to detecting that the control terminal is in the preset locked state and an emergency obstacle avoidance operation is triggered, releasing the preset locked state of the control terminal and controlling the panoramic UAV to stop flying.

28. The method according to claim 27, **characterized in that** the emergency obstacle avoidance operation comprises at least one of the following:
a preset trigger count, a preset trigger frequency, a preset trigger duration, or a preset combination trigger operation of different buttons for a physical button configured on the control terminal.

29. The method according to any of claims 12 to 28, **characterized in that** the method further comprises:
in response to detecting that the target object is not identified in the visual interface of the control terminal within a preset duration, controlling the panoramic UAV to hover and terminating the target follow mode; and
displaying an image corresponding to a preset view angle of the panoramic UAV and an alert message for prompting a failure of the target follow via the visual interface.

30. The method according to any of claims 12 to 28, **characterized in that** the method further comprises:
in response to detecting that a follow distance of the panoramic UAV for the target object is greater than a preset distance, terminating the target follow mode; and
displaying an image corresponding to the follow view angle and an alert message for prompting the follow distance via the visual interface.

31. The method according to any of claims 12 to 28, **characterized in that** the method further comprises:
in response to detecting an abnormal flight of the panoramic UAV, terminating the target follow mode; and
displaying an alert message for prompting the abnormal flight via the visual interface.

32. The method according to any of claims 12 to 28, **characterized in that** the method further comprises:
in response to identifying an obstacle in a forward area of the panoramic UAV, pausing the target follow mode; and
displaying an operation path for prompting to bypass the obstacle via the visual interface, so as to control the panoramic UAV to avoid the obstacle via the control terminal based on the operation path and resume the target follow mode.

33. The method according to claim 32, **characterized in that** the method further comprises:
in response to identifying the obstacle in the forward area of the panoramic UAV and not detecting that the panoramic UAV has avoided the obstacle within a preset duration, terminating the target follow mode; and
displaying prompt information for indicating that the target follow mode has been exited via the visual interface.

34. The method according to claim 32 or 33, **characterized in that** the method further comprises:
in response to identifying the obstacle in the forward area of the panoramic UAV and detecting that the panoramic UAV has avoided the obstacle within a preset duration, controlling the panoramic UAV to follow the target object according to the target follow mode.

35. A panoramic unmanned aerial vehicle (UAV), **characterized in that** the panoramic UAV comprises:
a panoramic image capturing device, configured to capture a panoramic image;
a wireless communication line, configured to send the panoramic image and obtain a control command, wherein the control command is generated by a control terminal of the panoramic UAV by obtaining the panoramic image, and after, in response to a trigger operation for a target following function, determining a target object based on the panoramic image; and
a processor, configured to follow the target object based on the control command.

36. A control terminal, **characterized in that** the control terminal comprises:
a communication module, configured to obtain a first panoramic image captured by a panoramic unmanned aerial vehicle (UAV);
one or more processors, working individually or collectively; and
a memory in communication with the processor, wherein the memory is configured to store instructions executable by the processor, and the instructions, when executed by the processor, cause the processor to:
in response to a trigger operation for a target following function, determine a target object based on the first panoramic image; and
control the panoramic UAV to follow the target object.

37. The control terminal according to claim 36, **characterized in that** the control terminal further comprises a display, configured to display a visual interface, wherein when the processor determines the target object based on the first panoramic image, the processor is configured to:
determine a first image based on the first panoramic image, the first image corresponding to a predetermined display view angle of the first panoramic image;
control the display to display the first image via the visual interface; and
in response to identifying an expected target for the first image, determine the expected target as the target object.

38. The control terminal according to claim 37, **characterized in that** the predetermined display view angle comprises any of the following:
a view angle corresponding to a somatosensory pose of the control terminal;
a view angle determined based on a trigger operation for a candidate view angle in the visual interface by a user; or
a preset view angle corresponding to a flight direction of the panoramic UAV.

39. The control terminal according to claim 37 or 38, **characterized in that** the processor is further configured to:
in response to not identifying the expected target for the first image, determine the target object from a holding object of the control terminal and a user selection object determined according to the first image, wherein the holding object of the control terminal has a higher priority.

40. The control terminal according to any of claims 37 to 39, **characterized in that** the processor is further configured to:
in a case where the expected target is not identified in the first image, adjust the predetermined display view angle and control the display to display a second image via the visual interface, the expected target being included in the second image corresponding to the adjusted display view angle.

41. The control terminal according to claim 40, **characterized in that** when the processor adjusts the predetermined display view angle, the processor is configured to:
in response to a trigger operation for adjusting the predetermined display view angle, adjust the predetermined display view angle,
wherein the trigger operation comprises at least one of the following:
a trigger operation for a control component configured on the control terminal; or
a trigger operation for the visual interface configured on the control terminal,
wherein the control component comprises at least one of the following: a joystick, a scroll wheel, or a preset button.

42. The control terminal according to claim 37 or 40, **characterized in that** the processor is further configured to:
in a case where it is determined that the first image or the second image comprises a plurality of candidate objects, obtain a display proportion of each candidate object in the first image or the second image; and
based on the display proportion, determine the expected target from the plurality of candidate objects.

43. The control terminal according to claim 37 or 40, **characterized in that** the processor is further configured to:
in a case where it is determined that the first image or the second image comprises a plurality of candidate objects, obtain a display position of each candidate object in the first image or the second image; and
based on the display position, determine the expected target from the plurality of candidate objects.

44. The control terminal according to claim 39, **characterized in that** the target object is determined by at least one of the following operations:
a trigger operation for a button configured on the control terminal; or
a trigger operation for a visual interface configured on the control terminal.

45. The control terminal according to any of claims 36 to 44, **characterized in that** the trigger operation for the target following function comprises at least one of the following:
a trigger operation for a button configured on the control terminal;
a trigger operation for a visual interface configured on the control terminal; or
matching a current pose of a holding object of the control terminal with a first preset pose.

46. The control terminal according to claim 39, **characterized in that** after the processor determines the holding object of the control terminal as the target object, the processor is further configured to:
determine a third image in the first panoramic image; and
control the display to display the third image via the visual interface, wherein the holding object is displayed in a centered manner in the third image.

47. The control terminal according to any of claims 36 to 46, **characterized in that** the processor is further configured to:
control the display to display a follow mode switching interface via the visual interface;
and
in response to a trigger operation for any follow mode in the follow mode switching interface, enter a target follow mode, wherein the target follow mode comprises any of the following: an automatic follow mode, a visual lock follow mode, or a surround follow mode.

48. The control terminal according to any of claims 36 to 47, **characterized in that** when the processor controls the panoramic UAV to follow the target object, the processor is configured to:
control the panoramic UAV to follow the target object to capture or record the target object.

49. The control terminal according to claim 48, **characterized in that** when the processor controls the panoramic UAV to follow the target object to capture or record the target object, the processor is configured to:
in the automatic follow mode, control the control terminal to be in a preset locked state, adjust a position of the panoramic UAV based on a relative position between the target object and the panoramic UAV, and control the panoramic UAV to capture or record the target object;
in the view angle lock mode, adjust a relative position between the target object and the panoramic UAV via the control terminal and control the panoramic UAV to capture or record the target object, so that a display view angle corresponding to a display screen on the control terminal is locked with the target object; and
in the surround mode, control the panoramic UAV and the target object to surround the target object in a target relative position relationship and control the panoramic UAV to capture or record the target object.

50. The control terminal according to claim 49, **characterized in that** the control terminal being in a preset locked state comprises at least one of the following:
buttons configured on the control terminal, except the preset button, are in a locked state, wherein the preset button is configured to trigger at least one of the following: a capturing operation, a recording operation, an emergency obstacle avoidance operation, or a flight pose control operation; or
a somatosensory control operation of a holding object of the control terminal for the panoramic UAV is in a locked state.

51. The control terminal according to claim 49, **characterized in that** the processor is further configured to:
control the display to display a follow view angle switching interface via the visual interface; and
in response to a trigger operation for a target follow view angle, control the display to display a display screen corresponding to the target follow view angle via the visual interface.

52. The control terminal according to claim 48, **characterized in that** the processor is further configured to:
in response to a trigger operation for the surround mode, control the display to display a switching interface for candidate relative position relationships via the visual interface, so as to determine the target relative position relationship from the switching interface.

53. The control terminal according to claim 48, **characterized in that** the processor is further configured to:
in response to detecting a release of the preset locked state of the control terminal, adjust the follow direction of the panoramic UAV for the target object via the control terminal; and
control the panoramic UAV to follow the target object based on the adjusted follow direction.

54. The control terminal according to claim 53, **characterized in that** the processor is further configured to:
in response to detecting that the control terminal moves in a preset direction, control the panoramic UAV to move in the preset direction; and
in response to detecting a performance of a preset action for a control component configured on the control terminal, adjust a distance between the panoramic UAV and a holding object of the control terminal.

55. The control terminal according to claim 54, **characterized in that** the control component comprises at least one of the following: a scroll wheel, a joystick, or a slider key.

56. The control terminal according to claim 54, **characterized in that** when the processor controls the panoramic UAV to follow the target object based on the adjusted follow direction, the processor is configured to:
in response to a trigger operation for the adjusted follow direction, resume the automatic follow mode, and control the panoramic UAV to follow the target object based on the adjusted follow direction,
wherein the trigger operation comprises at least one of the following:
a trigger operation for a button configured on the control terminal; or
a trigger operation for the visual interface configured on the control terminal.

57. The control terminal according to claim 48, **characterized in that** the processor is further configured to:
in response to a trigger operation for changing a follow target, control the panoramic UAV to release the follow state for the target object;
determine a changed object based on a second panoramic image captured by the panoramic UAV at a moment of releasing the follow; and
control the panoramic UAV to follow the changed object.

58. The control terminal according to claim 57, **characterized in that** the trigger operation for changing the follow target comprises at least one of the following:
a duration of a trigger operation for a button configured on the control terminal being longer than a preset threshold;
a duration of a trigger operation for the visual interface configured on the control terminal being longer than the preset threshold; or
matching a current pose of a holding object of the control terminal with a second preset pose.

59. The control terminal according to any of claims 53 to 55, **characterized in that** when the processor releases the preset locked state of the control terminal, the processor is configured to:
in the automatic follow mode, in response to detecting a trigger operation for releasing the preset locked state and a duration of the control terminal being aligned with the panoramic UAV is longer than a preset duration, trigger the response signal and release the preset locked state.

60. The control terminal according to any of claims 53 to 55, **characterized in that** when the processor releases the preset locked state of the control terminal, the processor is configured to:
in the automatic follow mode, in response to detecting a trigger operation for releasing the preset locked state and the control terminal not being aligned with the panoramic UAV within a preset period, prompt a holding object of the control terminal to adjust a pose of the control terminal until the adjusted control terminal is aligned with the panoramic UAV, triggering the response signal and releasing the preset locked state.

61. The control terminal according to any of claims 53 to 55, **characterized in that** when the processor releases the preset locked state of the control terminal, the processor is configured to:
in the automatic follow mode, in response to detecting that the control terminal is aligned with the panoramic UAV and no trigger operation for releasing the preset locked state is detected within a preset period, prompt the holding object to perform the trigger operation for releasing the preset locked state until the response signal is triggered and the preset locked state is released.

62. The control terminal according to any of claims 48 to 51, **characterized in that** the processor is further configured to:
in response to detecting that the control terminal is in the preset locked state and an emergency obstacle avoidance operation is triggered, release the preset locked state of the control terminal and control the panoramic UAV to stop flying.

63. The control terminal according to claim 62, **characterized in that** the emergency obstacle avoidance operation comprises at least one of the following:
a preset trigger count, a preset trigger frequency, a preset trigger duration, or a preset combination trigger operation of different buttons for a physical button configured on the control terminal.

64. The control terminal according to any of claims 47 to 63, **characterized in that** the processor is further configured to:
in response to detecting that the target object is not identified in the visual interface of the display within a preset duration, control the panoramic UAV to hover and terminate the target follow mode; and
control the display to display an image corresponding to a preset view angle of the panoramic UAV and an alert message for prompting a failure of the target follow via the visual interface.

65. The control terminal according to any of claims 47 to 63, **characterized in that** the processor is further configured to:
in response to detecting that a follow distance of the panoramic UAV for the target object is greater than a preset distance, terminate the target follow mode; and
control the display to display an image corresponding to the follow view angle and an alert message for prompting the follow distance via the visual interface.

66. The control terminal according to any of claims 47 to 63, **characterized in that** the processor is further configured to:
in response to detecting an abnormal flight of the panoramic UAV, terminate the target follow mode; and
control the display to display an alert message for prompting the abnormal flight via the visual interface.

67. The control terminal according to any of claims 47 to 63, **characterized in that** the processor is further configured to:
in response to identifying an obstacle in a forward area of the panoramic UAV, pause the target follow mode; and
control the display to display an operation path for prompting to bypass the obstacle via the visual interface, so as to control the panoramic UAV to avoid the obstacle via the control terminal based on the operation path and resume the target follow mode.

68. The control terminal according to claim 67, **characterized in that** the processor is further configured to:
in response to identifying the obstacle in the forward area of the panoramic UAV and not detecting that the panoramic UAV has avoided the obstacle within a preset duration, terminate the target follow mode; and
control the display to display prompt information for indicating that the target follow mode has been exited via the visual interface.

69. The control terminal according to claim 67 or 68, **characterized in that** the processor is further configured to:
in response to identifying the obstacle in the forward area of the panoramic UAV and detecting that the panoramic UAV has avoided the obstacle within a preset duration, control the panoramic UAV to follow the target object according to the target follow mode.

70. A flight system, **characterized in that** the flight system comprises:
a panoramic unmanned aerial vehicle (UAV), configured to capture a first panoramic image, send the first panoramic image to a control terminal, and receive a first control command from the control terminal to follow a target object based on the first control command; and
a control terminal, configured to
obtain the first panoramic image;
in response to a trigger operation for a target following function, determine the target object based on the first panoramic image;
generate a first control command for controlling the panoramic UAV to follow the target object based on the target object; and
send the first control command to the panoramic UAV.

71. The flight system according to claim 70, **characterized in that**:
the control terminal is further configured to, in response to a trigger operation for changing a follow target, control the panoramic UAV to release the follow state for the target object, obtain a second panoramic image captured by the panoramic UAV at a moment of releasing the follow, determine a changed object based on the second panoramic image, and generate a second control command based on the changed object; and
the panoramic UAV is further configured to capture a second panoramic image, send the second panoramic image to the control terminal, and receive a second control command from the control terminal to follow the changed object based on the second control command.

72. The flight system according to claim 71, **characterized in that**:
the control terminal is further configured to, in response to detecting that the target object is not identified in the visual interface of the control terminal within a preset duration, send a third control command for controlling the panoramic UAV to hover and terminate the target follow mode to the panoramic UAV, and display an image corresponding to a preset view angle of the panoramic UAV and an alert message for prompting a failure of the target follow via the visual interface; and
the panoramic UAV is further configured to obtain the third control command, hover at a position at a moment of receiving the third control command based on the third control command, and terminate following the target object.

73. The flight system according to claim 72, **characterized in that**:
the control terminal is further configured to, in response to identifying an obstacle in a forward area of the panoramic UAV, send a fourth control command for indicating to pause the target follow mode to the panoramic UAV, display an operation path for prompting to bypass the obstacle via the visual interface, so as to generate a fifth control command for controlling the panoramic UAV to avoid the obstacle based on a trigger operation triggered by the operation path, and in response to detecting that the panoramic UAV has avoided the obstacle, generate a sixth command for controlling the panoramic UAV to resume the target follow mode; and
the panoramic UAV is further configured to obtain the fourth control command, stop following the target object based on the fourth control command, obtain the fifth control command, avoid the obstacle based on the fifth control command, obtain the sixth control command, and resume following the target object based on the sixth control command.
